(19) Europäisches Patentamt
European Patent Office
Office européen des brevets

(11) EP 1 471 674 A1

(12) # EUROPÄISCHE PATENTANMELDUNG

(43) Veröffentlichungstag:
**27.10.2004 Patentblatt 2004/44**

(51) Int Cl.[7]: **H04J 11/00**, H04J 13/04, H04L 5/02

(21) Anmeldenummer: **03009464.3**

(22) Anmeldetag: **25.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT
80333 München (DE)**

(72) Erfinder: **Die Erfindernennung liegt noch nicht vor**

(54) **Verfahren, Sender und Empfänger zur Übertragung von Daten in einem CDMA-System mittels vollständig komplementären Codematrizen zur zweidimensionalen Spreizung der Daten in Frequenz- und Zeitrichtung**

(57) Die Erfindung betrifft ein Verfahren zur Übertragung von Datenbits zwischen mindestens einer Teilnehmerstation und einer Funkzugangseinrichtung in einem Funkkommunikationssystem, wobei jedes Datenbit auf mindestens zwei verschiedenen Einheiten einer ersten Funkressource Frequenzband (F1) übertragen wird, wobei senderseitig für jede Einheit der ersten Funkressource Frequenzband (F1) eine Spreizung der Datenbits derart stattfindet, dass jedes Datenbit mit jeweils einer Codematrix einer für die Einheiten der ersten Funkressource Frequenzband (F1) gleichen Gruppe von Codematrizen multipliziert wird, und wobei die Zeilen der Codematrizen jeweils einen Spreizcode bezüglich einer zweiten Funkressource Zeit (t) und die Spalten der Codematrizen jeweils einen Spreizcode bezüglich einer dritten Funkressource Frequenz (f) darstellen. Die zur Spreizung verwendeten Codematrizen sind derart beschaffen, dass mindestens zwei Gruppen von Codematrizen vorliegen, wobei jede Gruppe eine gleiche Anzahl an nummerierten Codematrizen beinhaltet, für jede Gruppe die Summe der Autokorrelationen aller Codematrizen ausschließlich im Fall verschwindender zweidimensionaler Verschiebung ungleich Null ist, und für alle Paare an jeweils zwei Gruppen die Summe der Kreuzkorrelationen aller aufgrund ihrer Nummerierung korrespondierender Codematrizen der jeweils zwei Gruppen für verschwindende und nicht verschwindende zweidimensionale Verschiebung gleich Null ist. Jedes Datenbit wird auf den mindestens zwei verschiedenen Einheiten der ersten Funkressource Frequenzband (F1) in Kombination mit einer durch die Spreizung vorgegebenen Anzahl an Einheiten der zweiten Zeit (t) und einer durch die Spreizung vorgegebenen Anzahl an Einheiten der dritten Frequenz (f) Funkressource übertragen.

FIG 21

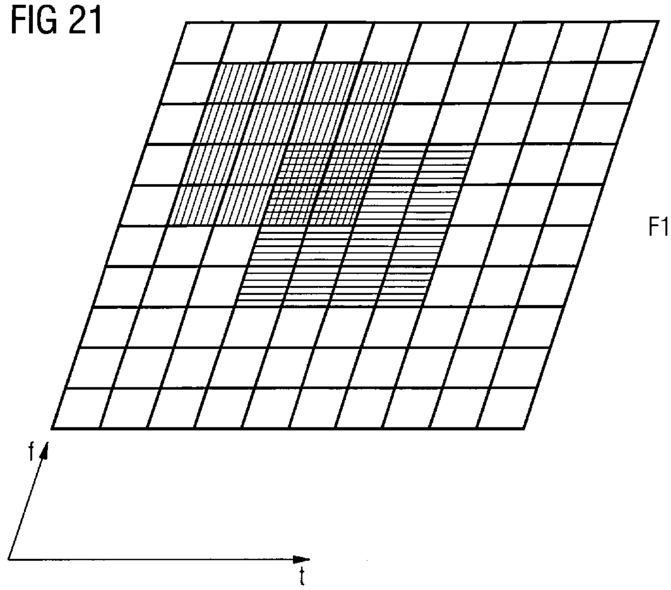


EP 1 471 674 A1

## Beschreibung

Die Erfindung betrifft ein Verfahren zur Übertragung von Datenbits zwischen mindestens einer Teilnehmerstation und einer Funkzugangseinrichtung in einem Funkkommunikationssystem. Weiterhin betrifft die Erfindung eine Sendevorrichtung zum Versenden von Datenbits zu einem Empfänger in einem Funkkommunikationssystem und eine Empfangsvorrichtung zum Verarbeiten von Datenbits.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Funkzugangseinrichtungen, wie Basisstationen oder Node B's, sowie gegebenenfalls weitere netzseitige Einrichtungen.

Der Zugriff von Stationen auf die gemeinsamen Funkressourcen des Übertragungsmediums, wie zum Beispiel Zeit, Raum, Frequenz und Leistung wird bei Funk-Kommunikationssystemen durch Vielfachzugriffsverfahren (Multiple Access, MA) geregelt.

Einige Funkkommunikationssysteme der dritten Generation verwenden ein Codevielfachzugriffsverfahren (CDMA, Code Division Multiple Access). Ein Beispiel hierfür sind WCDMA Systeme (Wideband CDMA). Hierzu zählt die FDD-Komponente (FDD: Frequency Division Duplex) des UMTS-Standards (UMTS: Universal Mobile Telecommunications System) in Europa sowie das amerikanische cdma2000.

Bei CDMA-Verfahren wird durch einen Spreizcode, der aus einer Reihe sogenannter Chips besteht, die zu übertragende Information codiert. Die Rückspreizung im Empfänger erfolgt wiederum durch Multiplikation mit dem Spreizcode. Sind die Spreizcodes verschiedener Teilnehmerstationen orthogonal, so können im Fall synchroner Datenübertragung die Signale anderer Teilnehmerstationen durch die Rückspreizung vollständig unterdrückt werden.

Bei direct-sequence CDMA-Verfahren wie IS-95, cdma2000 und WCDMA werden die zu übertragenden Bits mit einem Spreizcode multipliziert und dann als Folge von Chips nacheinander übertragen. In

Chen, H.H., Yeh, J.F., Suehiro, N.: "A multicarrier CDMA architecture based on orthogonal complete complementary codes for new generations of wideband wireless communications", IEEE Communications magazine, vol. 39, Oktober 2001, S. 126-134

wird die Verwendung von reellen eindimensionalen vollständig komplementären Spreizcodes zur Datenübertragung vorgeschlagen. Hierbei kann mit der Übertragung eines Datenbits begonnen werden, bevor alle Chips des vorhergehenden Datenbits gesendet wurden.

Der Erfindung liegt die Aufgabe zugrunde, ein effizientes Verfahren der eingangs genannten Art zur Übertragung von digitalen Daten unter Verwendung von Spreizcodes aufzuzeigen, sowie eine Sendevorrichtung zur Durchführung eines solchen Verfahrens und eine Empfangsvorrichtung zur Verarbeitung von derart gesendeten Daten.

Diese Aufgabe wird hinsichtlich des Verfahrens durch ein Verfahren mit den Merkmalen des Anspruchs 1 gelöst.

Vorteilhafte Weiterbildungen und Ausgestaltungen sind Gegenstand von Unteransprüchen.

Bei dem erfindungsgemäßen Verfahren zur Übertragung von Datenbits zwischen mindestens einer Teilnehmerstation und einer Funkzugangseinrichtung in einem Funkkommunikationssystem wird jedes Datenbit auf mindestens zwei verschiedene Einheiten einer ersten Funkressource übertragen. Senderseitig findet für jede Einheit der ersten Funkressource eine Spreizung der Datenbits derart statt, dass jedes Datenbit mit jeweils einer Codematrix einer für die Einheiten der ersten Funkressource gleichen Gruppe von Codematrizen multipliziert wird. Hierbei stellen die Zeilen der Codematrizen jeweils einen Spreizcode bezüglich einer zweiten Funkressource und die Spalten der Codematrizen jeweils ein Spreizcode bezüglich einer dritten Funkressource dar. Die zur Spreizung verwendeten Codematrizen sind derart beschaffen, dass

- mindestens zwei Gruppen von Codematrizen vorliegen, wobei jede Gruppe eine gleiche Anzahl an nummerierten Codematrizen beinhaltet,
- für jede Gruppe die Summe der Autokorrelationen aller Codematrizen ausschließlich im Fall verschwindender zweidimensionaler Verschiebung ungleich Null ist,
- für alle Paare an jeweils zwei Gruppen die Summe der Kreuzkorrelationen aller aufgrund ihrer Nummerierung korrespondierender Codematrizen der jeweils zwei Gruppen für verschwindende und nichtverschwindende zweidimensionale Verschiebung gleich Null ist.

Jedes Datenbit wird auf den mindestens zwei verschiedenen Einheiten der ersten Funkressource in Kombination mit einer durch die Spreizung vorgegebenen Anzahl an Einheiten der zweiten und einer durch die Spreizung vorgegebenen Anzahl an Einheiten der dritten Funkressource übertragen.

Das Verfahren zur Übertragung von Datenbits kann sowohl eine Übertragung in Aufwärtsrichtung (Uplink, UL), als auch eine Übertragung in Abwärtsrichtung (Downlink, DL) betreffen. Somit kann es sich bei dem Sender des Verfahrens sowohl um eine Teilnehmerstation als auch um eine Funkzugangseinrichtung des Funkkommunikationssystems, wie zum Beispiel eine Basisstation oder einen Funkzugangspunkt, handeln. Es liegt eine erste Funkressource, wie zum Beispiel Frequenz, Zeit oder Raum vor, welche in Einheiten, wie zum Beispiel Frequenzbänder, aufgeteilt ist. Jedes zu übertragene Datenbit wird auf einer Mehrzahl von Einheiten der ersten Funkressource übertragen.

Zur Spreizung eines Datenbits wird eine Gruppe von Codematrizen verwendet. Für jede Einheit der ersten Funkressource wird das Datenbit mit einer unterschiedlichen Codematrix dieser Gruppe multipliziert. Bei den verwendeten Codematrizen handelt es sich um vollständig komplementäre Codematrizen. Für diese gilt:

- Es liegen mehrere Gruppen von Codematrizen vor, welche jeweils die gleiche Anzahl an Codematrizen beinhalten.
- Die Autokorrelation einer Codematrix im Fall verschwindender zweidimensionaler Verschiebung berechnet sich aus der Summe über die Quadrate der einzelnen Einträge der Codematrix. Eine zweidimensionale Verschiebung wird dadurch erreicht, dass die Codematrix nach rechts oder links oder nach oben oder unten gegen sich selbst verschoben wird. Die Autokorrelation berechnet sich in diesem Fall der nichtverschwindenden Verschiebung als die Summe über die Produkte der aufeinander liegenden Matrixeinträge. Die Summe der Autokorrelationen aller Codematrizen einer Gruppe ist bei Vorliegen einer zweidimensionalen Verschiebung gleich Null. Hierbei muss bei der Berechnung der Autokorrelationen für jede Codematrix der Gruppe die gleiche Verschiebung angewandt werden. Ausschließlich in dem Fall, dass keine Verschiebung vorliegt, ist die Summe der Autokorrelationen aller Codematrizen der Gruppe ungleich Null.
- Bezüglich der Kreuzkorrelationseigenschaften der Codematrizen einer Gruppe gilt Folgendes: Unabhängig vom Vorliegen einer Verschiebung ist die Summe der Kreuzkorrelationen aller aufgrund ihrer Nummerierung korrespondierender Codematrizen aus jeweils zwei Gruppen gleich Null. Dies bedeutet, dass bei Vorliegen von zwei Gruppen von Codematrizen die Kreuzkorrelation zwischen der ersten Codematrix der ersten Gruppe und der ersten Codematrix der zweiten Gruppe bei einer bestimmten Verschiebung plus die Kreuzkorrelation zwischen der zweiten Codematrix der ersten Gruppe und der zweiten Codematrix der zweiten Gruppe bei der gleichen Verschiebung plus die Kreuzkorrelation zwischen der dritten Codematrix der ersten Gruppe und der dritten Codematrix der zweiten Gruppe bei der gleichen Verschiebung und so weiter gleich Null ist. Dies gilt bei Vorliegen einer Vielzahl an Gruppen paarweise jeweils für beliebige zwei Gruppen.

Im Anschluss an die senderseitige Spreizung des Datenbits für jede Einheit der ersten Funkressource wird das gespreizte Datenbit, d.h. die Chips, auf der Mehrzahl der Einheiten der ersten Funkressource übertragen. Hierzu wird gemäß der Spreizung eine bestimmte Anzahl an Einheiten der zweiten und der dritten Funkressource eingesetzt.

In Weiterbildung der Erfindung sind die zur Spreizung verwendeten Codematrizen derart beschaffen, dass sie über eine Formel herleitbar sind aus einem oder mehreren Sets von Gruppen von Vektoren. Innerhalb eines jeden Sets von Gruppen von Vektoren

- beinhaltet jede Gruppe von Vektoren eine gleiche Anzahl an nummerierten Vektoren,
- ist für jede Gruppe die Summe der Autokorrelationen aller Vektoren ausschließlich im Fall verschwindender eindimensionaler Verschiebung ungleich Null, und
- ist für alle Paare an jeweils zwei Gruppen die Summe der Kreuzkorrelationen aller aufgrund ihrer Nummerierung korrespondierender Vektoren der jeweils zwei Gruppen für verschwindende und nichtverschwindende eindimensionale Verschiebung gleich Null.

Bei diesen Vektoren handelt es sich um vollständig komplementäre Codevektoren, deren Eigenschaften zum Beispiel in dem oben zitierten Stand der Technik vorgestellt werden. Beispiele für Formeln zur Herleitung der zur Spreizung verwendeten Codematrizen aus den eindimensionalen Codevektoren finden sich unten im Ausführungsbeispiel in den Formeln 1 bis 4.

Vorteilhafterweise wird mindestens zwei Teilnehmerstationen des Funkkommunikationssystems eine voneinander unterschiedliche Gruppe von Codematrizen zugewiesen. Dadurch kann eine gleichzeitige Kommunikation der mindestens zwei Teilnehmerstationen mit der Funkzugangseinrichtung stattfinden: die mindestens zwei Teilnehmerstationen können gleichzeitig unter Verwendung der ihnen jeweils zugewiesenen Gruppe von Codematrizen Signale an die Funkzugangseinrichtung senden, und die Funkzugangseinrichtung kann gleichzeitig unter Verwendung der den mindestens zwei Teilnehmerstationen jeweils zugewiesenen unterschiedlichen Gruppen von Codematrizen unterschiedliche Signale an die mindestens zwei Teilnehmerstationen versenden. Durch die beschriebenen Kreuzkorrelationseigenschaften der Gruppen von Codematrizen kann in dem Empfänger eine Trennung der Signale, welche unter Verwendung von unterschiedlichen Gruppen von Codematrizen gespreizt wurden, stattfinden. Insbesondere ist es möglich, jeder Teilnehmerstation zur Kommunikation mit der Funkzugangseinrichtung eine eigene Gruppe von Codematrizen zuzuweisen. In diesem Fall darf die Anzahl der vorhandenen Gruppen von Codematrizen die Anzahl der kommunizierenden Teilnehmerstationen nicht untertreffen.

In einer Ausgestaltung der Erfindung werden mindestens einer Teilnehmerstation eine Gruppe von Codematrizen und zweite und/oder dritte Funkressourcen zugewiesen. Dies ist insbesondere dann von Vorteil, wenn mehreren Teilnehmerstationen die gleiche Gruppe von Codematrizen zugewiesen wird. In diesem Fall kann eine Trennung der Signale, welche unter Verwendung der gleichen Gruppe von Codematrizen zu oder von diesen Teilnehmerstationen gesendet werden, durch die Verwendung der zugewiesenen zweiten und/oder dritten Funkressourcen stattfinden. Diese zweiten und/oder dritten Funkressourcen, bzw. die jeweils zugeteilten Einheiten der zweiten und dritten Funkressourcen, sollten sich dann für die Teilnehmerstationen mit der gleichen Gruppe von Codematrizen voneinander unterscheiden bzw. nicht überlappen. Dieses Vorgehen ermöglicht es, dass die Anzahl der mit der Funkzugangseinrichtung kommunizierenden Teilnehmerstationen die Anzahl der verwendeten Gruppen von Codematrizen übertrifft.

Vorzugsweise wird jedes Datenbit für jede Einheit der ersten Funkressource auf gleichen oder einander entsprechenden Einheiten der zweiten und der dritten Funkressource übertragen. Dies ermöglicht eine einfache Verarbeitung der Chips im Empfänger. Es ist jedoch auch möglich, für jede Einheit der ersten Funkressource verschiedene, sich nicht entsprechende Einheiten der zweiten und der dritten Funkressource zu verwenden.

In Weiterbildung der Erfindung überschneiden sich die zur Übertragung von mindestens zwei aufeinanderfolgenden Datenbits für mindestens eine Einheit der ersten Funkressource verwendeten Einheiten der zweiten in Kombination mit den Einheiten der dritten Funkressource teilweise. Während für Datenbits, welche unter Verwendung von unterschiedlichen Gruppen von Codematrizen gespreizt werden, ein völlige Überschneidung der Einheiten der zweiten und der dritten Funkressource für jede Einheit der ersten Funkressource möglich ist, darf bei Verwendung einer einzigen Gruppe von Codematrizen für verschiedene Datenbits nur eine partielle Überlappung der Einheiten der zweiten und der dritten Funkressource für jede Einheit der ersten Funkressource vorliegen. Diese Überlappung ermöglicht eine besonders effiziente Ausnutzung der Funkressourcen und eine Anpassung der Datenrate an den aktuellen Bedarf.

Insbesondere können die zur Übertragung von mindestens zwei aufeinanderfolgenden Datenbits für mindestens eine Einheit der ersten Funkressource verwendeten Einheiten der zweiten in Kombination mit den Einheiten der dritten Funkressource senderseitig nach einem Muster bestimmt werden. Das Muster gibt dabei an, um wie viele Einheiten in Richtung der zweiten und/oder der dritten Funkressource die für ein darauffolgendes Datenbit verwendeten Funkressourcen im Vergleich zum vorangehenden Datenbit verschoben sind. Das Muster kann von Teilnehmerstation zu Teilnehmerstation variieren und zum Beispiel von der aktuellen Ressourcenausschöpfung des Funkkommunikationssystems abhängen.

In Ausgestaltung der Erfindung wird empfängerseitig für die mindestens zwei verschiedenen Einheiten der ersten Funkressource jeweils Korrelationen zwischen den empfangenen gespreizten Datenbits mit einer Codematrix der senderseitig verwendeten Gruppe von Codematrizen und eine Summation von Korrelationsergebnissen über die verschiedenen Einheiten der ersten Funkressource durchgeführt. Diese Berechnungen nutzen die oben beschriebenen Auto- und Kreuzkorrelationseigenschaften der verwendeten Codematrizen aus. Hierbei werden die auf jeder Einheit der ersten Funkressource empfangenen Chips mit der jeweiligen Codematrix, welche der Sender auf dieser Einheit der ersten Funkressource zur Spreizung eingesetzt hat, korreliert. Eine Summation über diese Korrelationsergebnisse der einzelnen Einheiten der ersten Funkressource erfolgt im Anschluss.

Die oben genannte Aufgabe hinsichtlich der Sendevorrichtung wird durch eine Sendevorrichtung mit den Merkmalen des Anspruchs 9 gelöst.

Die Sendevorrichtung zum Versenden von Datenbits zu einem Empfänger in einem Funkkommunikationssystem weist Mittel zum Übertragen eines jeden Datenbits auf mindestens zwei verschiedenen Einheiten einer ersten Funkressource auf, weiterhin Mittel zum Spreizen der Datenbits für jede Einheit der ersten Funkressource derart, dass jedes Datenbit mit jeweils einer Codematrix einer für die Einheiten der ersten Funkressource gleichen Gruppe von Codematrizen multipliziert wird, wobei die Zeilen der Codematrizen jeweils ein Spreizcode bezüglich einer zweiten Funkressource und die Spalten der Codematrizen jeweils ein Spreizcode bezüglich einer dritten Funkressource darstellen. Die zur Spreizung verwendeten Codematrizen sind derart beschaffen, dass

- mindestens zwei Gruppen von Codematrizen vorliegen, wobei jede Gruppe eine gleiche Anzahl an nummerierten Codematrizen beinhaltet,
- für jede Gruppe die Summe der Autokorrelationen aller Codematrizen ausschließlich im Fall verschwindender zweidimensionaler Verschiebung ungleich Null ist, und
- für alle Paare an jeweils zwei Gruppen die Summe der Kreuzkorrelationen aller aufgrund ihrer Nummerierung korrespondierender Codematrizen der jeweils zwei Gruppen für verschwindende und nichtverschwindende zweidimensionale Verschiebung gleich Null ist.

Weiterhin weist die Sendevorrichtung Mittel zum Übertragen eines jeden Datenbits auf den mindestens zwei verschiedenen Einheiten der ersten Funkressource in Kombination mit einer durch die Spreizung vorgegebenen Anzahl an Einheiten der zweiten und einer durch die Spreizung vorgegebenen Anzahl an Einheiten der dritten Funkressource auf.

Die erfindungsgemäße Sendevorrichtung eignet sich insbesondere zur Durchführung des erfindungsgemäßen Verfahrens. Hierzu kann sie weitere geeignete Mittel umfassen.

Die oben genannte Aufgabe hinsichtlich der Empfangsvorrichtung wird durch eine Empfangsvorrichtung mit den Merkmalen des Anspruchs 10 gelöst.

Die erfindungsgemäße Empfangsvorrichtung zur Verarbeitung von gemäß dem Verfahren nach Anspruch 1 übertragenen Datenbits weist Mittel zum Berechnen von Korrelationen jeweils für die mindestens zwei verschiedenen Einheiten der ersten Funkressource zwischen den empfangenen gespreizten Datenbits mit eine Codematrix der sendeseitig verwendeten Gruppe von Codematrizen auf und Mittel zum Berechnen von Summen von Korrelationsergebnissen über die verschiedenen Einheiten der ersten Funkressource.

Die erfindungsgemäße Empfangsvorrichtung eignet sich insbesondere zur Durchführung der empfängerseitigen Verfahrensschritte des erfindungsgemäßen Verfahrens. Hierzu kann sie weitere geeignete Mittel umfassen.

Sowohl die erfindungsgemäße Sendevorrichtung als auch die erfindungsgemäße Empfangsvorrichtung können sowohl als Teilnehmerstation als auch als Funkzugangseinrichtung eines Funkkommunikationssystems ausgestaltet sein.

Im folgenden wird die Erfindung anhand eines Ausführungsbeispiels näher erläutert. Dabei zeigen

Figur 1: zwei Gruppen von reellen eindimensionalen vollständig komplementären Spreizcodes der Länge 4,

Figur 2: eine Datenübertragung unter Verwendung eines eindimensionalen Kanals gemäß dem Stand der Technik,

Figur 3: eine Gruppe von reellen quadratischen Codematrizen der Dimension 4×4,

Figur 4: eine zweidimensionale Verschiebung von Matrizen,

Figur 5: vier Gruppen von reellen eindimensionalen vollständig komplementären Spreizcodes der Länge 16,

Figur 6a: zwei reelle quadratische Codematrizen der Dimension 16×16 einer Gruppe von Codematrizen,

Figur 6b: zwei weitere reelle quadratische Codematrizen der Dimension 16×16 einer Gruppe von Codematrizen,

Figur 7: zwei Gruppen von komplexen eindimensionalen vollständig komplementären Spreizcodes der Länge 4,

Figur 8: zwei Gruppen von komplexen quadratischen Codematrizen der Dimension 4×4,

Figur 9: eine komplexe quadratische Codematrix der Figur 8,

Figur 10: eine Gruppe von reellen rechteckigen Codematrizen der Dimension 16×4,

Figur 11a: zwei Gruppen von komplexen eindimensionalen vollständig komplementären Spreizcodes der Länge 16,

Figur 11b: zwei weitere Gruppen von komplexen eindimensionalen vollständig komplementären Spreizcodes der Länge 16,

Figur 12a: ein erster Teil von komplexen rechteckigen Codematrizen einer Gruppe von Codematrizen der Dimension 16 × 4 ,

Figur 12b: ein zweiter Teil der komplexen rechteckigen Codematrizen einer Gruppe von Codematrizen der Dimension 16×4 ,

Figur 13: vier Gruppen von reellen quadratischen Codematrizen der Dimension 4×4,

Figur 14: vier Gruppen von komplexen quadratischen Codematrizen der Dimension 4×4,

Figur 15: eine Gruppe von reellen rechteckigen Codematrizen der Dimension 16×4,

Figur 16a: ein erster Teil von acht komplexen rechteckigen Codematrizen einer Gruppe von Codematrizen der Dimension 16×4 ,

Figur 16b: ein zweiter Teil von acht komplexen rechteckigen Codematrizen einer Gruppe von Codematrizen der Dimension 16×4,

Figur 17: zwei Frequenz-Zeit Ebenen,

Figur 18: schematisch die Spreizung eines Datenbits nach dem erfindungsgemäßen Verfahren,

Figur 19: schematisch eine erste Versendung eines Datenbits auf zwei Ebenen,

Figur 20: schematisch eine zweite Versendung eines Datenbits auf zwei Ebenen,

Figur 21: schematisch die Versendung zweier aufeinanderfolgender Datenbits auf einer Ebene,

Figur 22: eine spezielle Spreizung eines Datenbits,

Figur 23a: ein erstes Beispiel für eine Kommunikation zweier Teilnehmerstationen auf einer Ebene mit der gleichen Codematrix,

Figur 23b: ein zweites Beispiel für eine Kommunikation zweier Teilnehmerstationen auf einer Ebene mit der gleichen Codematrix,

Figur 24: einen erfindungsgemäßen Sender,

Figur 25: einen erfindungsgemäßen Empfänger.

Im folgenden wird zuerst die Verwendung von eindimensionalen vollständig komplementären Spreizcodes (Complete Complementary Codes, CCC) erläutert. Figur 1 zeigt hierzu zwei Gruppen g1 und g2 solcher Spreizcodes, wobei die erste Gruppe g1 aus den Vektoren $f_1^1$ und $f_2^1$ und die zweite Gruppe g2 aus den Vektoren $f_1^2$ und $f_2^2$ besteht.

Die Autokorrelation eines Vektors bei verschwindender Verschiebung wird definiert als die Summe der Quadrate der einzelnen Komponenten des Vektors, für den Vektor $f_1^1$ also z.B. (+1)·(+1)+(+1)·(+1)+(+1)·(+1)+(-1)·(-1) = 4. Bei einer Verschiebung von +1, d.h. um eins nach rechts, ergibt sich die Autokorrelation eines Vektors als die Summe der Produkte der drei übereinanderliegenden Vektorkomponenten, für den Vektor $f_1^1$ also z.B. (+1)·(+1)+(+1)·(+1)+(-1)·(+1)=1 . Vollständig komplementäre Spreizcodes weisen die Eigenschaft auf, dass die Summe der Autokorrelationen aller Vektoren einer Gruppe ausschließlich im Fall verschwindender eindimensionaler Verschiebung ungleich Null ist. So ergibt sich beispielsweise die Autokorrelation für den Vektor $f_2^1$ bei einer Verschiebung von +1 gemäß (-1)·(+1)+(+1)·(-1)+(+1)·(+1)=-1. Die Summe der beiden Autokorrelationen der Vektoren $f_1^1$ und $f_2^1$ der Gruppe g1 bei einer Verschiebung von +1 beträgt somit Null. Ausschließlich bei einer verschwindenden Verschiebung ergibt sich für die Summe der beiden Autokorrelationen der Vektoren $f_1^1$ und $f_2^1$ der Gruppe g1 ein von Null abweichender Wert, nämlich der Wert 8.

Die Kreuzkorrelation zweier Vektoren bei verschwindender Verschiebung wird definiert als die Summe der Produkte der einzelnen Komponenten der verschiedenen Vektoren, für die Vektoren $f_1^1$ und $f_1^2$ also z.B. (+1)·(+1)+(+1)·(+1)+(+1)·(-1)+(-1)·(+1)=0 . Entsprechend ergibt sich die Kreuzkorrelation zweier Vektoren bei einer nichtverschwindenden Verschiebung als die Summe der Produkte der übereinanderliegenden Vektorkomponenten, also z.B. für die Vektoren $f_1^1$ und $f_1^2$ bei einer Verschiebung von +2 gemäß (+1)·(+1)+(-1)·(+1) = 0. Vollständig komplementäre Spreizcodes weisen die Eigenschaft auf, dass für jeweils zwei Gruppen die Summe der Kreuzkorrelationen aller aufgrund ihrer Nummerierung korrespondierender Vektoren für verschwindende und nicht verschwindende eindimensionale Verschiebung gleich Null ist. Bei den beiden Gruppen g1 und g2 korrespondieren jeweils die Vektoren $f_1^1$ und $f_1^2$, sowie die Vektoren $f_2^1$ und $f_2^2$. Ein Wert von Null ergibt sich somit beispielsweise bei der Summation der Kreuzkorrelation bei einer Verschiebung von +1 der beiden Vektoren $f_1^1$ und $f_1^2$ und der Kreuzkorrelation bei einer Verschiebung von +1 der

beiden Vektoren $f_2^1$ und $f_2^2$. Existieren mehr als zwei Gruppen von Vektoren, so gilt diese Aussage für alle Zweierpaare aus Gruppen, welche gebildet werden können.

Figur 2 zeigt schematisch die Übertragung von Datenbits D, welche im betrachteten Beispiel aus einer Reihe von Einsern bestehen, unter Verwendung zweier eindimensionaler Kanäle, welche durch die Funkressource Zeit charakterisiert sind. In Figur 2 ist daher nach rechts der Verlauf der Zeit t aufgetragen. Weiterhin sind die beiden Kanäle durch eine Funkressource in Form einer Funkfrequenz F1 und F2 gekennzeichnet. Auf dem ersten Kanal mit der Funkfrequenz F1 werden die einzelnen Bits der Datenbits D unter Verwendung des Vektors $f_1^1$ der Länge L von vier Chips als Spreizcode übertragen. Dabei werden die Chips der einzelnen Bits jedoch nicht nacheinander, sondern in zeitlicher Überlagerung übertragen. So wird der zweite Chip (d.h. +1) des ersten Bits gleichzeitig mit dem ersten Chip (d.h. +1) des zweiten Bits übertragen. Hierzu überträgt der Sender den Wert +2. Durch diese Überlagerung der Chips ergibt sich, dass das Modulationsverfahren derart ausgestaltet sein muss, dass (L+1) verschiedene Werte innerhalb der Zeitdauer eines Chips übertragbar sind. Insbesondere bei großen Längen L eines Spreizcodes stellt dies eine erhebliche Anforderung an das zu verwendende Modulationsverfahren dar. Auf dem zweiten Kanal mit der Funkfrequenz F2 werden zur gleichen Zeit die einzelnen Bits der Datenbits D unter Verwendung des Vektors $f_2^1$ der Länge L von vier Chips als Spreizcode in analoger Weise zur Beschreibung des Kanals mit der Funkfrequenz F1 übertragen.

Der Empfänger korreliert jeweils vier empfangene Chips mit dem jeweiligen Spreizvektor, für den Kanal mit der Funkfrequenz F1 also mit $f_1^1$ und für den Kanal mit der Funkfrequenz F2 mit $f_2^1$. Diese Korrelation entspricht der oben beschriebenen Autokorrelation mit und ohne Verschiebung der Vektoren gegeneinander. Danach findet im Empfänger eine Summenbildung der Autokorrelationsergebnisse der beiden Kanäle mit den Funkfrequenzen F1 und F2 statt. Aufgrund der oben beschriebenen Autokorrelationseigenschaften von vollständig komplementären Spreizcodes ergibt sich für die in Figur 2 berechnete Summe aus Korrelationen nur für das vierte Bit der Datenbits D ein positiver Wert von 8 für die Summe (in Figur 2 am rechten Rand dargestellt). Somit kann der Empfänger für jede berechnete Korrelation über jeweils vier Chips den Wert eines gesendeten Bits auslesen. Dieses Vorgehen weist gegenüber direct-spread-Verfahren den Vorteil auf, dass jedes gesendete Chip ein Bit an Nutzinformation trägt.

Der Verarbeitungsgewinn bzw. Prozessgewinn (processing gain) als Maß dafür, mit welcher Wahrscheinlichkeit ein im Empfänger detektiertes Bit mit dem gesendeten Bit übereinstimmt, entspricht der Summe der Längen der Vektoren einer Gruppe, für die Gruppen g1 und g2 also 8.

Treffen am Empfänger zusammen mit den in Figur 2 dargestellten Chipfolgen weitere Signale ein, welche unter Verwendung der Vektoren $f_1^2$ und $f_2^2$ der anderen Gruppe g2 gespreizt und auch auf den Kanälen mit den Funkfrequenzen F1 und F2 übertragen wurden, so entspricht die im Empfänger durchgeführte Korrelation mit den Vektoren $f_1^1$ und $f_2^1$ in Bezug auf diese Signale der Berechnung der oben beschriebenen Kreuzkorrelationen. Aufgrund der Tatsache, dass die Summen dieser Kreuzkorrelationen unabhängig von der Verschiebung den Wert Null annehmen, können diese weiteren Signale von der in Figur 2 dargestellten Chipfolge getrennt werden. Bei Verwendung der beiden Gruppen g1 und g2 können somit Daten zweier Nutzer eines Funkkommunikationssystems gleichzeitig übertragen werden, ohne dass eine gegenseitige Störung auftritt, indem dem ersten Nutzer die Gruppe g1 und dem zweiten Nutzer die Gruppe g2 zugewiesen wird. Dies gilt aufgrund der zeitlichen Synchronisierung der Versendung von Signalen an verschiedene Nutzer insbesondere für die Übertragung in Abwärtsrichtung (Downlink, DL). Bei einer Datenübertragung in Aufwärtsrichtung (Uplink, UL) sind die Signale verschiedener Nutzer in der Regel nicht vollständig synchron, sondern leicht gegeneinander verschoben. Bei einer Verschiebung um eine ganzzahlige Anzahl an Chipdauern lassen sich die Signale der verschiedenen Nutzer am Empfänger aufgrund der Kreuzkorrelationseigenschaften der Vektoren $f_1^1$, $f_2^1$, $f_1^2$ und $f_2^2$ vollständig trennen. Beträgt die Verschiebung der Signale jedoch einen Bruchteil einer Chipdauer, tritt eine gegenseitige Störung auf, welche jedoch geringer ausfällt als bei konventionellen CDMA-Verfahren.

Erfindungsgemäß werden zur Spreizung der zu übertragenden Datenbits Matrizen verwendet. Diese Matrizen lassen sich auf verschiedene Arten aus eindimensionalen vollständig komplementären Spreizcodes gewinnen.

Im folgenden wird davon ausgegangen, dass N Gruppen von linearen vollständig komplementären Spreizcodes mit jeweils N Vektoren vorliegen. Der n-te Vektor der k-ten Gruppe wird mit $f_n^k$ bezeichnet, er weist $L = N^2$ Komponenten auf:

$$f_n^k = \left(f_{n,1}^k, f_{n,2}^k, \ldots, f_{n,L}^k\right).$$

Für reelle Spreizcodes gilt: $f^k_{n,j} \in \{\pm 1\}$ .

Die erfindungsgemäße n-te Matrix der k-ten Gruppe wird mit $C^k_n$ bezeichnet, wobei $c^k_{n,i}$ die i-te Spalte der Matrix $C^k_n$ darstellt. Bei der Matrix $C^k_n$ handelt es sich um eine Matrix der Dimension $L \times L$.

Eine erfindungsgemäße Matrix kann berechnet werden gemäß

$$C^k_{n,i} = f^k_{[(n-1)\bmod N]+1} \times f^k_{v,i} \qquad \text{(Formel 1)},$$

wobei $k$=1,2,...,$N$ , d.h. es existieren N Gruppen, und $n$ =1,2,...,$N^2$ , d.h. jede Gruppe beinhaltet $N^2$ Matrizen, und

$$v = \left\lfloor \frac{n-1}{N} + 1 \right\rfloor .$$

Die Schreibweise $\lfloor s \rfloor$ stellt dabei die größte ganze Zahl dar, welche kleiner oder gleich s ist.

Die Multiplikation der Formel 1 stellt eine skalare Multiplikation eines Vektors mit einer Komponente eines Vektors, d.h. einer Zahl, dar.

Jede Gruppe weist somit $N^2$ Matrizen auf. Es lässt sich zeigen, dass für jede derart berechnete Gruppe die Summe der Autokorrelationen aller Matrizen ausschließlich im Fall verschwindender zweidimensionaler Verschiebung ungleich Null ist, und dass für alle Paare an jeweils zwei Gruppen die Summe der Kreuzkorrelationen aller aufgrund ihrer Nummerierung korrespondierender Matrizen für verschwindende und nicht verschwindende zweidimensionale Verschiebung gleich Null ist. Die Eigenschaften der Matrizen entsprechen somit bezüglich der Auto- und Kreuzkorrelationen den Eigenschaften der zugrundeliegenden eindimensionalen vollständig komplementären Spreizcodes.

Der Wert der Autokorrelationen für verschwindende zweidimensionale Verschiebung beträgt $(N^2)^3$. Da der Verarbeitungsgewinn der Summe der Anzahl der Matrixeinträge aller Matrizen einer Gruppe entspricht, ist der Wert $(N^2)^3$ auch gleich dem Verarbeitungsgewinn der Matrizen bei Verwendung als Spreizmatrix.

Für den Fall N=2 sind die eindimensionalen vollständig komplementären Spreizcodes der ersten Gruppe g1, $f^1_1$ und $f^1_2$, sowie der zweiten Gruppe g2, $f^2_1$ und $f^2_2$, in Figur 1 dargestellt. Daraus ergibt sich die in Figur 3 dargestellte erste Gruppe G1 von Matrizen $C^1_1$, $C^1_2$, $C^1_3$ und $C^1_4$. In diesem Fall besteht eine Gruppe aus 4 Matrizen, der Verarbeitungsgewinn beträgt 64.

Beispielhaft soll für die Matrizen der Figur 3 die Berechnung von Autokorrelationen beschrieben werden. Betrachtet wird die Berechnung von Autokorrelationen bei einer nicht verschwindenden zweidimensionalen Verschiebung. Die Verschiebung ist hierbei wie in Figur 4 dargestellt derart, dass eine Überlappung der sechs Matrixelemente stattfindet, welche sich in den obersten beiden Zeilen und den letzten drei Spalten der ersten bzw. in den untersten drei Zeilen und den ersten drei Spalten der zweiten Matrix befinden. Zur Berechnung der Korrelation zweier derart gegeneinander verschobenen Matrizen werden die übereinanderliegenden Matrixelemente jeweils miteinander multipliziert und dann die berechneten Produkte addiert. Die Autokorrelation der Matrix $C^1_1$ ergibt sich bei einer Verschiebung gemäß Figur 4 dann aus

$(-1)\cdot(+1)+(+1)\cdot(-1)+(+1)\cdot(+1)+(+1)\cdot(+1)+(-1)\cdot(-1)+(-1)\cdot(+1)=0$ , die Autokorrelation der Matrix $C^1_2$ bei der gleichen Verschiebung aus

$(+1)\cdot(+1)+(+1)\cdot(+1)+(-1)\cdot(+1)+(-1)\cdot(+1)+(-1)\cdot(+1)+(+1)\cdot(+1)=0$, diejenige der Matrix $C^1_3$ aus

$(-1)\cdot(+1)+(+1)\cdot(-1)+(+1)\cdot(+1)+(-1)\cdot(-1)+(+1)\cdot(+1)+(+1)\cdot(-1)=0$ , und diejenige der Matrix $C^1_4$ aus

$(+1)\cdot(+1)+(+1)\cdot(+1)+(-1)\cdot(+1)+(+1)\cdot(-1)+(+1)\cdot(-1)+(-1)\cdot(-1)=0$. Die Summe dieser vier Autokorrelationen ergibt den Wert Null. Auf analoge Weise findet die Berechnung von Autokorrelationen für andere oder verschwindende zweidimensionale Verschiebungen statt, sowie die Berechnung der Kreuzkorrelationen mit Matrizen der anderen (in Figur 3 nicht dargestellten) Gruppen.

Für den Fall $N$=4 sind die eindimensionalen vollständig komplementären Spreizcodes der ersten Gruppe g1, nämlich die Vektoren $f^1_1$, $f^1_2$, $f^1_3$, und $f^1_4$, der zweiten Gruppe g2, nämlich die Vektoren $f^2_1$, $f^2_2$, $f^2_3$ und $f^2_4$ , der dritten Gruppe g3, nämlich die Vektoren $f_1^3$ , $f_2^3$, $f_3^3$ und $f_4^3$ , sowie der vierten Gruppe g4, nämlich die Vektoren $f_1^4$, $f_2^4$, $f_3^4$ und $f_4^4$ , in Figur 5 dargestellt. Die Figuren 6a und 6b zeigen beispielhaft vier aus den Vektoren der Figur 5 berechnete Codematrizen der ersten Gruppe G1 in Form der Matrizen $C_4^1$, $C_{8,}^1$ $C_{12}^1$ und $C_{16}^1$ . Im Fall *N*=4 besteht jede Gruppe aus 16 Matrizen, der Verarbeitungsgewinn beträgt 4096.

Die Formel 1 kann auch verwendet werden zur Bestimmung von erfindungsgemäßen Matrizen aus komplexen eindimensionalen vollständig komplementären Spreizcodes, welche z.B. in

Doostnejad, R., Lim, T.J., Sousa, E.S.: Two dimensional spreading codes for downlink in a multiuser system with multiple antennas, Proceedings of WPMC 2002, Honolulu, Hawaii, S. 743-747

vorgestellt werden. In Figur 7 ist eine Gruppe g1 von komplexen eindimensionalen vollständig komplementären Spreizcodes der Länge 4, bestehend aus den Vektoren $f_1^1$, $f_2^1$, und eine Gruppe g2, bestehend aus den Vektoren $f_1^2$ und $f_2^2$, für den Fall N = 2 dargestellt. Hierbei stehen die Klammern (x,y) für eine komplexe Zahl mit dem Realteil x und dem Imaginärteil y.

Figur 8 zeigt ausgehend von den Vektoren der Figur 7 ermittelte komplexe quadratische Matrizen der ersten Gruppe G1 von Matrizen, nämlich $C_1^1$, $C_2^1$, $C_3^1$ und $C_4^1$, und der zweiten Gruppe G2 von Matrizen, nämlich $C_1^2$, $C_2^2$, $C_3^2$ und $C_4^2$. Zur Verdeutlichung zeigt Figur 9 die Matrix $C_1^1$ in ausgeschriebener Form, d.h. in komplexer Schreibweise.

Bei den erfindungsgemäßen Matrizen muss es sich jedoch nicht um quadratische Matrizen handeln. Im folgenden wird eine Formel zur Berechnung von rechteckigen Matrizen vorgestellt: die erfindungsgemäße n-te Matrix der k-ten Gruppe wird mit $C_n^k$ bezeichnet, wobei $c_{n,i}^k$ die i-te Spalte der Matrix $C_n^k$ darstellt. Bei der Matrix $C_n^k$ handelt es sich um eine Matrix der Dimension $P^2 \times Q^2$.

Die Spalten $c_{n,i}^k$ der Matrix $C_n^k$ werden berechnet gemäß

$$c_{n,i}^k = f(Q)_{[(n\text{-}1)\bmod\ Q]+1}^k \times f(P)_{v,i}^t \qquad \text{(Formel 2)},$$

wobei *k*=1,2,...,*Q* , d.h. es existieren Q Gruppen, und *n*=1,2,...,*PxQ,* d.h. jede Gruppe beinhaltet $P \times Q$ Matrizen, und

$$\nu = \left\lfloor \frac{n-1}{Q} + 1 \right\rfloor .$$

Bei t handelt es sich um eine ganzzahlige Konstante mit $1 \le t \le P$.

In diese Berechnung der Codematrizen gehen zwei verschiedene eindimensionale vollständig komplementäre oben gemäß

$$f_n^k = \left(f_{n,1}^k, f_{n,2}^k, \ldots, f_{n,L}^k\right)$$

definierte Spreizcodes ein. *f*(*Q*) steht für einen solchen mit *N* = *Q* und *f*(*P*) für einen solchen mit *N*=*P*. Im Fall *P* = *Q* lassen sich mit der Formel 2 quadratische Matrizen berechnen.

Der Verarbeitungsgewinn dieser Matrizen entspricht $P^3 \times Q^3$, entsprechend der Anzahl der Matrixelemente aller Matrizen einer Gruppe. Für die Auto- und Kreuzkorrelationseigenschaften gelten die Aussagen bezüglich der mittels Formel 1 berechneten Matrizen.

Für den Fall *P*=2 und *Q* = 4 zeigt Figur 10 die acht reellen rechteckigen Codematrizen $C_1^1$, $C_2^1$, $C_3^1$, $C_4^1$ , $C_5^1$, $C_6^1$, $C_7^1$ und $C_8^1$ der ersten Gruppe G1. Jede Gruppe beinhaltet acht Codematrizen, der Verarbeitungsgewinn beträgt 512.

Die selbe Berechnungsvorschrift der Formel 2 kann auch auf komplexe eindimensionale Codevektoren angewandet werden, um komplexe Codematrizen zu erhalten. Im folgenden wird weiterhin der Fall *P*=2 und *Q* = 4 betrachtet. Figur 7 zeigt die Vektoren $f_1^1$, $f_2^1$, $f_1^2$ und $f_2^2$ für den Fall *N* = 2, die Figuren 11a und 11b zeigen die Vektoren $f_1^1$,

$f_2^1$, $f_3^1$ und $f_4^1$ der ersten Gruppe g1, die Vektoren $f_1^2$, $f_2^2$, $f_3^2$ und $f_4^2$ der zweiten Gruppe g2, die Vektoren $f_1^3$, $f_2^3$, $f_3^3$ und $f_4^3$ der dritten Gruppe g3 und die Vektoren $f_1^4$, $f_2^4$, $f_3^4$ und $f_4^4$ der vierten Gruppe g4 für den Fall $N = 4$. Aus diesen beiden verschieden langen eindimensionalen Codevektoren für die Fälle $N = 2$ und $N = 4$ werden gemäß der Formel 2 acht komplexe rechteckige Codematrizen $C_1^1$, $C_2^1$, $C_3^1$, $C_4^1$, $C_5^1$, $C_6^1$, $C_7^1$ und $C_8^1$ der ersten Gruppe G1 gebildet, welche in den Figuren 12a und 12b dargestellt sind. Sowohl die Anzahl der Matrizen pro Gruppe als auch der Verarbeitungsgewinn stimmt mit dem der reellen Codematrizen überein.

Bislang wurde gezeigt, dass sich N Gruppen von Matrizen herleiten lassen aus eindimensionalen vollständig komplementäre Spreizcodes der Länge $N^2 = L$, bzw. für den rechteckigen Fall Q Gruppen von Matrizen aus eindimensionalen vollständig komplementäre Spreizcodes der Länge $Q^2$ und $P^2$. Im folgenden wird dargelegt, dass $N^2$ Gruppen ableitbar sind aus eindimensionalen vollständig komplementäre Spreizcodes der Länge $N^2$. Die erfindungsgemäße n-te Matrix der k-ten Gruppe wird mit $C_n^k$ bezeichnet, wobei $c^k_{n,i}$ die i-te Spalte der Matrix $C_n^k$ darstellt. Bei der Matrix $C_n^k$ handelt es sich um eine Matrix der Dimension $L \times L$.

Eine erfindungsgemäße Matrix kann berechnet werden gemäß

$$c_{n,i}^k = f_{[(n-1)\bmod N]+1}^{[(k-1)\bmod N]+1} \times f_{v,i}^t \qquad \text{(Formel 3)},$$

wobei $k = 1,2,...,N^2$, d.h. es existieren $N^2$ Gruppen, und $n = 1, 2,..., N^2$, d.h. jede Gruppe beinhaltet $N^2$ Matrizen, und

$$v = \left\lfloor \frac{n-1}{N} + 1 \right\rfloor, \quad t = \left\lfloor \frac{k-1}{N} + 1 \right\rfloor.$$

In diesem Fall entspricht die Anzahl der Matrizen pro Gruppe und der Verarbeitungsgewinn den entsprechenden Größen der Formel 1, jedoch ist die Anzahl an Gruppen um den Faktor N größer. Die Eigenschaften bezüglich der Auto- und Kreuzkorrelation entsprechen denjenigen der Formel 1.

Figur 13 zeigt für den Fall $N = 2$ die erste Gruppe G1 mit den Matrizen $C_1^1$, $C_2^1$, $C_3^1$, $C_4^1$, die zweite Gruppe G2 mit den Matrizen $C_1^2$, $C_2^2$, $C_3^2$, $C_4^2$, die dritte Gruppe G3 mit den Matrizen $C_1^3$, $C_2^3$, $C_3^3$, $C_4^3$, sowie die vierte Gruppe G4 mit den Matrizen $C_1^4$, $C_2^4$, $C_3^4$, $C_4^4$. Gegenüber den korrespondierenden quadratischen reellen Matrizen für den Fall $N$=2 der Figur 3 ist die Anzahl der Gruppen der Figur 13 verdoppelt, d.h. mit dem Faktor N = 2 multipliziert. Der Verarbeitungsgewinn für die Matrizen der Figur 13 liegt bei 64.

Der Vorteil bei Verwendung der Formel 3 liegt darin, dass durch die größere Anzahl an verschiedenen Gruppen einer größeren Anzahl an Teilnehmerstationen eine jeweils unterschiedliche Gruppe von Codematrizen zur Kommunikation zugewiesen werden kann, somit ist eine Steigerung der Anzahl gleichzeitig kommunizierender Teilnehmer innerhalb der gleichen Funkzelle möglich.

Figur 14 zeigt die vier Gruppen G1, G2, G3 und G4 von jeweilsvier Codematrizen $C_1^1$, $C_2^1$, $C_3^1$, $C_4^1$, $C_1^2$, $C_2^2$, $C_3^2$, $C_4^2$, $C_1^3$, $C_2^3$, $C_3^3$, $C_4^3$ $C_1^4$, $C_2^4$, $C_3^4$, $C_4^4$ bei Verwendung von komplexen linearen Codevektoren gemäß Figur 7.

Auch für rechteckige Codematrizen ist eine Steigerung der Anzahl an Gruppen von $Q$ auf $QxP$ möglich unter Verwendung von

$$C_{n,i}^k = f(\mathrm{Q})_{[(n-1)\bmod N]+1}^{[(k-1)\bmod N]+1} \times f\,(P)_{v,i}^t \qquad \text{(Formel 4)},$$

wobei $k$=1,2,...,$P \times Q$, d.h. es existieren $Q \times P$ Gruppen, und $n$=1,2,...,$P \times Q$, d.h. jede Gruppe beinhaltet $Q \times P$ Matrizen, und

$$v = \left\lfloor \frac{n-1}{N} + 1 \right\rfloor, \quad t = \left\lfloor \frac{k-1}{N} + 1 \right\rfloor.$$

Gegenüber der Formel 2 ist die Anzahl der Gruppen um den Faktor P gesteigert, während die Größe der einzelnen Codematrizen, der Verarbeitungsgewinn und die Auto- und Kreuzkorrelationseigenschaften unverändert sind.

Für den Fall *P*=2 und *Q* = 4 zeigt Figur 15 die acht rechteckigen Codematrizen $C_1^8$ , $C_2^8$, $C_3^8$, $C_4^8$, $C_5^8$, $C_6^8$, $C_7^8$ und $C_8^8$ der achten Gruppe G8. Der Verarbeitungsgewinn beträgt 512. Die Figuren 16a und 16b zeigen die acht komplexen Matrizen $C_1^1$, $C_2^1$, $C_3^1$, $C_4^1$, $C_5^1$, $C_6^1$, $C_7^1$ und $C_8^1$ der ersten Gruppe von Codematrizen für den Fall *P* = 2 und *Q* = 4, welche man unter Anwendung der Formel 4 ausgehend von den eindimensionalen komplexen Vektoren der Figuren 7, 11a und 11b erhält.

Den beschriebenen Codematrizen gemäß den Formeln 1, 2, 3 und 4 ist der Vorteil gemein, dass sie einen hohen Verarbeitungsgewinn aufweisen, und somit eine große Sicherheit der empfängerseitigen Detektion ermöglichen. Gegenüber den eindimensionalen vollständig komplementären Codevektoren wird aufgrund der größeren Anzahl an Matrixelementen im Vergleich zur Anzahl an entsprechenden Vektorkomponenten der Verarbeitungsgewinn gesteigert.

Ein weiterer Vorteil des erfindungsgemäßen Verfahrens gegenüber der Verwendung von eindimensionalen vollständig komplementären Codevektoren liegt in der Komplexität des zu verwendenden Modulationsverfahrens. Wie oben bereits beschrieben, muss das Modulationsverfahren bei eindimensionalen Codevektoren der Länge $L = N^2$ eine gleichzeitige Versendung von $L$+1 verschiedenen Symbolen ermöglichen. Wird jedem Nutzer eine eigene Gruppe von Codevektoren zur Kommunikation zugewiesen, so beträgt die maximale Anzahl an Nutzern N. Somit erfordert die Verwendung von eindimensionalen vollständig komplementären Codevektoren insbesondere bei einer großen Anzahl an Nutzern eine hohe Komplexität des Modulationsverfahrens. Bei gleichem Verarbeitungsgewinn des erfindungsgemäßen Verfahrens im Vergleich zu der Verwendung von eindimensionalen vollständig komplementären Codevektoren erfordern die Codematrizen lediglich die Möglichkeit, $N$+1 verschiedene Symbole zu einem Zeitpunkt versenden zu können. Dies führt zu einer vorteilhaften Reduzierung der Anforderungen an das Modulationsverfahren.

Zur Kommunikation wird einer Teilnehmerstation eines Funkkommunikationssystems eine Gruppe von Codematrizen zugewiesen. Jedes von oder zu der Teilnehmerstation zu übertragende Datenbit wird auf mehreren Einheiten einer ersten Funkressource übertragen. Bei dieser ersten Funkressource kann es sich z.B. um eine Frequenz wie im Beispiel der Figur 2 handeln, oder auch um Raumrichtungen gemäß dem MIMO (Multiple In Multiple Out) Verfahren. Hierbei werden sowohl sender- als auch empfängerseitig eine Mehrzahl von Sende- bzw. Empfangsantennen eingesetzt, wodurch der Empfänger die von dem Sender durch die verschiedenen Antennen gesendeten Signale voneinander trennen kann.

Die Einheiten der ersten Funkressource können als Ebenen verbildlicht werden, welche durch zwei weitere Funkressourcen, die zweite und die dritte Funkressource, aufgespannt werden. Jedoch kann neben Frequenz oder Raum auch jede beliebige andere Funkressource als erste Funkressource, nach welcher die Ebenen unterschieden werden, verwendet werden, wie z.B. eine Anzahl aufeinanderfolgender Zeitschlitze.

Figur 17 zeigt zwei Frequenz-Zeit Ebenen, welche durch die erste Funkressource Frequenz unterschieden sind. Die erste Ebene ist durch die Funkfrequenz F1, die zweite durch die Funkfrequenz F2 gekennzeichnet. Bei den Funkfrequenzen F1 und F2 handelt es sich jeweils um ein Frequenzband, welches weiter in Subbänder untergliedert werden kann. Diese Untergliederung findet unter Verwendung der dritten Funkressource der Frequenz f statt, so dass hierdurch ein Mehrträger-CDMA Verfahren beschrieben wird. Hierbei kann es sich insbesondere um äquidistante, orthogonale Subbänder handeln. Weiterhin werden die Ebenen in gleich lange Zeitabschnitte gemäß der zweiten Funkressource der Zeit t gegliedert. Die elementaren Flächen der Frequenz-Zeit Ebenen stehen somit für eine Kombination aus einem Subband und einem Zeitabschnitt, sie haben alle die gleiche Fläche. Neben Frequenz und Zeit können für die zweite und die dritte Funkressource auch beliebige andere Funkressourcen bzw. Kombinationen aus Funkressourcen eingesetzt werden. Ein Beispiel hierfür ist die Verwendung von Zeit-Raum Ebenen.

Jeder Frequenz-Zeit Ebene wird eine Codematrix der der Teilnehmerstation zugewiesenen Gruppe von Codematrizen zugeordnet. Daher sollte die Anzahl der zur Verfügung stehenden Ebenen der Anzahl der Matrizen der Gruppen entsprechen oder diese zumindest nicht unterschreiten. Jedes zu übertragende Datenbit wird auf jeder Frequenz-Zeit Ebene unter Verwendung der zugeordneten Matrix gespreizt. Hierzu dienen die Zeilen der Matrix als Spreizung bezüglich der zweiten Funkressource, d.h. der Zeit t. Die Spalten der Codematrizen dienen der Spreizung bezüglich der dritten Funkressource, d.h. der Frequenz f.

Figur 18 zeigt beispielhaft eine solche Spreizung. Bei dem zu übertragenden Datenbit D handelt es sich um eine Eins. Diese wird multipliziert mit der Matrix $C_1^1$ der Figur 3, welche der Ebene mit der Funkfrequenz F1 zugeordnet wurde. Dieses Multiplikationsergebnis wird derart auf der Ebene mit der Funkfrequenz F1 übertragen, dass auf einem ersten Subträger f1 zu einem ersten Zeitpunkt t1 der Chip +1, zu einem zweiten Zeitpunkt t2 der Chip -1, zu einem dritten Zeitpunkt t3 der Chip +1 und zu einem vierten Zeitpunkt t4 der Chip +1 übertragen wird. Gleichzeitig wird auf einem zweiten Subträger f2 zu einem ersten Zeitpunkt t1 eine -1, zu einem zweiten Zeitpunkt t2 eine +1, zu einem dritten Zeitpunkt t3 eine -1 und zu einem vierten Zeitpunkt t4 eine -1 übertragen. Entsprechendes gilt für einen dritten und einen vierten Subträger f3 und f4.

Eine entsprechende Spreizung des gleichen Datenbits D wird für die anderen Ebenen unter Verwendung der diesen Ebenen zugeordneten Codematrizen durchgeführt, wobei keine Codematrix mehreren Ebenen zugeordnet ist. Zur Übertragung werden im einfachsten Fall auf den anderen Ebenen die gleichen bzw. die entsprechenden Flächen wie auf der ersten Ebene verwendet, d.h. die gleichen Zeitpunkte t1, t2, t3 und t4, sowie die gleichen Subträger f1, f2, f3 und f4. Dieser Fall ist in Figur 19 dargestellt. Dies bedeutet bezüglich der zweiten Funkressource der Zeit t, dass auf den verschiedenen Ebenen eine gleichzeitige Versendung der Chips stattfindet, bezüglich der dritten Funkressource der Frequenz f entspricht dies einer Verschiebung im Frequenzraum um jeweils einen konstanten Betrag, welcher dem Frequenz-Unterschied zwischen den verschiedenen Ebenen entspricht.

Jedoch ist es auch möglich, auf den verschiedenen Ebenen die Chips eines Datenbits auf einander nicht entsprechenden Flächen zu übertragen, wie in Figur 20 dargestellt. Hier werden zur Übertragung der Chips des Datenbits auf der Ebene mit der Funkfrequenz F2 die Zeitpunkte t1, t2, t3 und t4, sowie die Subbänder f1, f2, f3 und f4 verwendet, während zur Übertragung der Chips des gleichen Datenbits auf der Ebene mit der Funkfrequenz F1 die Zeitpunkte t2, t3, t4 und t5, sowie die Subbänder f3, f4, f5 und f6 verwendet werden. Die unterschiedlichen Positionen der Flächen auf den Subbändern müssen dem Empfänger mitgeteilt werden. Eine dynamische Veränderung der relativen Positionen der Flächen der Chips eines Datenbits zueinander steigert die Abhörsicherheit der Datenübertragung.

Für ein darauffolgendes Datenbit wird für jede Ebene die gleiche Spreizung durchgeführt. In Figur 21 sind die für die Übertragung eines ersten Datenbits verwendeten Einheiten der zweiten und der dritten Funkressource durch ein vertikal schraffiertes Quadrat gekennzeichnet. Die für die Übertragung des darauffolgenden Datenbits verwendeten Einheiten der zweiten und der dritten Funkressource sind als horizontal schraffiertes Quadrat gekennzeichnet. Diese beiden Quadrate können sich überlappen, wie in Figur 21 dargestellt. Im allgemeinen kann das zweite Quadrat auf beliebige Weise gegen das erste in der Ebene verschoben sein. Lediglich eine verschwindende Verschiebung ist nicht möglich, da sonst die sich vollständig überlappenden Bits im Empfänger nicht mehr getrennt werden können. Auch eine Verschiebung in lediglich einer Richtung ist anwendbar, so z.B. eine reine Verschiebung entlang der dritten Funkressource der Frequenz f, so dass eine Mehrzahl von Datenbits gleichzeitig übertragen werden kann. Überlappen sich die Chips verschiedener Datenbits in den Ebenen, so werden auf den Funkressourcen, welche den überlappenden Elementarflächen entsprechen, die Kombinationen der sich überlappenden Symbole gesendet. Entsprechend der obigen Ausführungen bezüglich der Verwendung gleicher oder sich entsprechender Einheiten der zweiten und der dritten Funkressourcen auf den verschiedenen Ebenen können bei der Versendung von aufeinanderfolgenden Datenbits die Überlappungen in den verschiedenen Ebenen gleich oder unterschiedlich ausfallen.

Entsprechende Ausführungen gelten neben den quadratischen reellen Codematrizen für alle oben beschriebenen erfindungsgemäßen Codematrizen.

Durch die beschriebene Überlappung innerhalb der Ebenen können die gespreizten Datenbits auf effektive und ressourcensparende Weise auf die Ebenen verteilt übertragen werden, wodurch die zur Verfügung stehenden Funkressourcen im Vergleich zu herkömmlichen CDMA-Verfahren deutlich besser ausgenutzt werden können. Eine große Überlappung der Flächen entspricht einer hohen Übertragungsrate. Somit ist es möglich, die Übertragungsrate dem Bedarf anzupassen, indem die zweidimensionale Verschiebung der zur Übertragung verwendeten Flächen gegeneinander angepasst wird. Von Vorteil hierbei ist, dass der Verarbeitungsgewinn unabhängig von der Übertragungsrate ist, so dass selbst bei der maximalen Übertragungsrate der Verarbeitungsgewinn nicht sinkt. Im Vergleich zur Verwendung von eindimensionalen vollständig komplementären Codevektoren ist die maximale Übertragungsrate bei Verwendung von Codematrizen deutlich höher. Dies wird dadurch verursacht, dass bei Verwendung von Codematrizen eine Verschiebung der Flächen aufeinanderfolgender Datenbits in zwei Dimensionen erfolgen kann, während bei den Codevektoren die Verschiebung nur in eine Richtung möglich ist. Bei Frequenz-Zeit Ebenen z.B. ist die Anzahl der gleichzeitig übertragenen Chips lediglich durch die Anzahl der Subbänder limitiert. Ermöglicht es die Anzahl der Subbänder z.B., vier Flächen von Chips überlappend in der gleichen Zeitspanne lediglich mit einer Verschiebung in Richtung der Frequenz zu versenden, so ist die hierdurch erreichte Datenrate viermal größer als bei Verwendung von Codevektoren.

Wie im eindimensionalen Fall beschrieben führt der Empfänger eine Korrelation zwischen den auf den verschiedenen Ebenen empfangenen Chips der gespreizten Datenbits und der auf der jeweiligen Ebene verwendeten Codematrix durch. Weiterhin werden die Korrelationsergebnisse der verschiedenen Ebenen summiert. Aufgrund der Autokorrelationseigenschaften der erfindungsgemäßen Codematrizen können somit die gesendeten Datenbits von einander getrennt detektiert werden.

Anderen Teilnehmerstationen können andere Gruppen von Codematrizen zugewiesen werden. Die Zuweisung von Codematrizen zu den Ebenen erfolgt dann für alle Teilnehmerstationen nach einem einheitlichen Muster, so dass die Matrizen $C_1^i$ z.B. der ersten Ebene zugeordnet werden, die Matrizen $C_2^i$ der zweiten Ebene, usw., wobei i für die verschiedenen Gruppen bzw. für die verschiedenen Teilnehmerstationen steht. Aufgrund der Kreuzkorrelationseigenschaften der Codematrizen können die zur Übertragung verwendeten Flächen der Ebenen verschiedener Teilnehmerstationen sich partiell oder total überlappen. Bei einer Überlappung überträgt der Sender dann die Kombination bzw. Summe aus den einzelnen Chips. Eine Funkzugangseinrichtung als Empfänger kann somit Datenbits von verschiedenen Nutzern, welche unter Verwendung der gleichen oder überschneidender Flächen an Chips in den Ebenen gesendet wurden, voneinander trennen. Ebenso kann eine Teilnehmerstation als Empfänger Datenbits, welche von einer Funkzugangseinrichtung unter Verwendung der gleichen oder überschneidender Flächen der Ebenen zu anderen Teilnehmerstationen gesendet wurden, von den für sie bestimmten Datenbits unterscheiden.

Bislang wurde davon ausgegangen, dass die Ebenen aus einer Anzahl aufeinanderfolgender Einheiten einer zweiten in Kombination mit einer Anzahl aufeinanderfolgender Einheiten der dritten Funkressource bestehen. Das erfindungsgemäße Verfahren lässt sich jedoch auch dann anwenden, wenn die Ebenen Löcher aufweisen, d.h. manche Elementarflächen der Ebenen nicht zur Datenübertragung zur Verfügung stehen. In diesem Fall können die Quadrate der Figur 19 ihre Gestalt bei gleichbleibender Gesamtfläche verändern, es muss sich dann nicht mehr um einfach zusammenhängende Flächen handeln.

Weiterhin kann es sich im allgemeinen bei den in den Figuren 18 bis 21 dargestellten Flächen an Chips auch um nicht zusammenhängende Flächen handeln, wie beispielhaft in Figur 22 gezeigt. In diesem Fall werden die Chips nicht ausschließlich zu aufeinanderfolgenden Zeitpunkten in aufeinanderfolgenden Subträgern übertragen. Die summierte Fläche der in Figur 22 schraffiert dargestellten Elementarflächen der Ebene entspricht gemäß der Verwendung einer 4x4 Codematrix zur Spreizung einem Quadrat mit den Seitenlängen von vier Elementarflächen der Ebene.

Wird jeder Teilnehmerstation innerhalb einer Funkzelle eines Funkkommunikationssystems eine eigene Gruppe von Codematrizen zur Kommunikation zugewiesen, so können die Teilnehmerstationen unabhängig davon, auf welchen zweiten und dritten Funkressourcen die anderen Teilnehmerstationen kommunizieren, Datenbits auf beliebigen Flächen in den Ebenen senden und empfangen. Aufgrund der Kreuzkorrelationseigenschaften können die Signale von bzw. für die Teilnehmerstationen mit verschiedenen Gruppen von Codematrizen unterschieden werden. Dieses Vorgehen hat jedoch den Nachteil, dass die maximale Anzahl der Teilnehmerstationen innerhalb einer Funkzelle durch die Anzahl der Gruppen nach oben hin beschränkt ist. Daher kann es vorteilhaft sein, manchen Teilnehmerstationen die gleiche Gruppe an Codematrizen zur Kommunikation zuzuweisen.

Verwenden jedoch mehrere Teilnehmerstationen die gleiche Codematrix auf überlappenden Flächen einer Ebene, so ist eine Trennung der Signale dieser Teilnehmerstationen nicht mehr möglich. Daher ist es vorteilhaft, den Teilnehmerstationen mit der gleichen Gruppe von Codematrizen zusätzlich zweite und/oder dritte Funkressourcen zuzuweisen. Eine derartige Zuweisung ist in den Figuren 23a und 23b exemplarisch veranschaulicht.

In Figur 23a wurde einer ersten Teilnehmerstation (die Chips der ersten Teilnehmerstation sind durch vertikale Schraffur gekennzeichnet) die Subbänder f1, f2, f3, f4 und f5 zugewiesen, während einer zweiten Teilnehmerstation (die Chips der zweiten Teilnehmerstation sind durch horizontale Schraffur gekennzeichnet) die Frequenzbänder f6, f7, f8, f9 und f10 zugewiesen wurden. Somit können die beiden Teilnehmerstationen, wie in Figur 23a gezeigt, gleichzeitig unter Verwendung der gleichen Codematrix kommunizieren.

In Figur 23b ist der Fall dargestellt, dass der ersten Teilnehmerstation die Zeitpunkte t1, t2, t3, t4 und t5 zugewiesen wurden, während der zweiten Teilnehmerstation die Zeitpunkte t6, t7, t8, t9 und t10 zugewiesen wurden. Somit können die beiden Teilnehmerstationen auf den gleichen Subbändern unter Verwendung der gleichen Codematrix zur Spreizung kommunizieren.

Im allgemeinen ist es möglich, einer beliebigen Anzahl an Teilnehmerstationen, welche sich der gleichen Gruppe von Codematrizen zur Kommunikation bedienen, eine beliebige Kombination von zweiten und dritten Funkressourcen zuzuweisen, solange es zu keiner Überschneidung der Chips dieser Teilnehmerstationen kommt. Bezüglich der Abhörsicherheit kann eine dynamische Zuweisung der zweiten und/oder dritten Funkressourcen (chip hopping) von Vorteil sein.

Für die Übertragung von Daten in Abwärtsrichtung liegt in der Regel eine Synchronisierung zwischen den Datenübertragungen zu verschiedenen Teilnehmerstationen vor. In diesem Fall kann aufgrund der Auto- und Kreuzkorrelationseigenschaften der Codematrizen eine vollständige Trennung der Daten verschiedener Teilnehmerstationen erreicht werden. Für die Übertragung von Daten in Aufwärtsrichtung jedoch ist eine solche annähernd ideale Synchronisierung oftmals nicht vorhanden. Eine Untersuchung von relevanten Größen bei der asynchronen Datenübertragung in einem Mehrträger-CDMA-System wurde in

B.M. Popovic: Spreading Sequences for Multicarrier CDMA systems, IEEE Trans. on Communications, vol. 47, Nr. 6, Juni 1999, S. 918-926

vorgestellt. Bezugnehmend auf die relevanten Größen "Crest-Faktor", dynamischer Bereich der komplexen Signaleinhüllenden ("dynamic range of complex signal envelope") und gegenseitige Interferenz ("mutual interference") lässt sich zeigen, dass die erfindungsgemäßen Codematrizen auch bei asynchroner Datenübertragung ihre Orthogonalitätseigenschaften im wesentlichen beibehalten.

Ein erfindungsgemäßer Sender S ist in Figur 24 dargestellt. Dieser umfasst Mittel M1 zum Übertragen eines jeden Datenbits auf mehreren Einheiten der ersten Funkressource, sowie Mittel M2 zum erfindungsgemäßen Spreizen der Datenbits für jede Ebene, sowie Mittel M3 zum Übertragen eines Datenbits auf mehreren Ebenen gemäß der Spreizung. Weiterhin kann der Sender Mittel zum Bestimmen von Codematrizen gemäß den Formeln 1 bis 4 aus eindimensionalen vollständig komplementären Spreizcodes aufweisen.

Die Figur 25 zeigt einen erfindungsgemäßen Empfänger E mit Mitteln M4 zum Berechnen von Korrelationen zwischen empfangenen Chips und den gemäß dem senderseitigen Verfahren relevanten Codematrizen und mit Mitteln M5 zum Berechnen von Summen von Korrelationsergebnissen, welche für die einzelnen Ebenen berechnet wurden.

**Patentansprüche**

1. Verfahren zur Übertragung von Datenbits (D) zwischen mindestens einer Teilnehmerstation und einer Funkzugangseinrichtung in einem Funkkommunikationssystem,

   - wobei jedes Datenbit (D) auf mindestens zwei verschiedenen Einheiten (F1, F2) einer ersten Funkressource übertragen wird,
   - wobei senderseitig für jede Einheit (F1, F2) der ersten Funkressource eine Spreizung der Datenbits (D) derart stattfindet, dass jedes Datenbit (D) mit jeweils einer Codematrix ($C^1_1, C^1_2, C^1_3, C^1_4 ; C^1_4, C^1_8, C^1_{12}, C^1_{16}; C^2_1, C^2_2, C^2_3, C^2_4; C^1_1, C^1_2, C^1_3, C^1_4, C^1_5, C^1_6, C^1_7, C^1_8; C^1_1, C^1_2, C^1_3, C^1_4, C^2_1, C^2_2, C^2_3, C^2_4, C^3_1, C^3_2, C^3_3, C^3_4, C^4_1, C^4_2, C^4_3, C^4_4 ; C^8_1, C^8_2, C^8_3, C^8_4, C^8_5, C^8_6, C^8_7 , C^8_8$) einer für die Einheiten (F1, F2) der ersten Funkressource gleichen Gruppe (G1, G2, G3, G4, G8) von Codematrizen multipliziert wird,
   - wobei die Zeilen der Codematrizen ($C^1_1, C^1_2, C^1_3, C^1_4 ; C^1_4, C^1_8, C^1_{12}, C^1_{16}; C^2_1, C^2_2, C^2_3, C^2_4; C^1_1, C^1_2, C^1_3, C^1_4, C^1_5, C^1_6, C^1_7, C^1_8; C^1_1, C^1_2, C^1_3, C^1_4, C^2_1, C^2_2, C^2_3, C^2_4, C^3_1, C^3_2, C^3_3, C^3_4, C^4_1, C^4_2, C^4_3, C^4_4; C^8_1, C^8_2, C^8_3, C^8_4, C^8_5, C^8_6, C^8_7 , C^8_8$) jeweils einen Spreizcode bezüglich einer zweiten Funkressource (t) und die Spalten der Codematrizen ($C^1_1, C^1_2, C^1_3, C^1_4 ; C^1_4, C^1_8, C^1_{12}, C^1_{16}; C^2_1, C^2_2, C^2_3, C^2_4; C^1_1, C^1_2, C^1_3, C^1_4, C^1_5, C^1_6, C^1_7, C^1_8; C^1_1, C^1_2, C^1_3, C^1_4, C^2_1, C^2_2, C^2_3, C^2_4, C^3_1, C^3_2, C^3_3, C^3_4, C^4_1, C^4_2, C^4_3, C^4_4; C^8_1, C^8_2, C^8_3, C^8_4, C^8_5, C^8_6, C^8_7 , C^8_8$) jeweils einen Spreizcode bezüglich einer dritten Funkressource (f) darstellen,
   - wobei die zur Spreizung verwendeten Codematrizen ($C^1_1, C^1_2, C^1_3, C^1_4 ; C^1_4, C^1_8, C^1_{12}, C^1_{16}; C^2_1, C^2_2, C^2_3, C^2_4; C^1_1, C^1_2, C^1_3, C^1_4, C^1_5, C^1_6, C^1_7, C^1_8; C^1_1, C^1_2, C^1_3, C^1_4, C^2_1, C^2_2, C^2_3, C^2_4, C^3_1, C^3_2, C^3_3, C^3_4, C^4_1, C^4_2, C^4_3, C^4_4; C^8_1, C^8_2, C^8_3, C^8_4, C^8_5, C^8_6, C^8_7 , C^8_8$) derart beschaffen sind, dass

     - mindestens zwei Gruppen (G1, G2, G3, G4, G8) von Codematrizen vorliegen, wobei jede Gruppe (G1, G2, G3, G4, G8) eine gleiche Anzahl an nummerierten Codematrizen beinhaltet,
     - für jede Gruppe (G1, G2, G3, G4, G8) die Summe der Autokorrelationen aller Codematrizen ausschließlich im Fall verschwindender zweidimensionaler Verschiebung ungleich Null ist, und
     - für alle Paare an jeweils zwei Gruppen (G1, G2, G3, G4, G8) die Summe der Kreuzkorrelationen aller aufgrund ihrer Nummerierung korrespondierender Codematrizen der jeweils zwei Gruppen (G1, G2, G3, G4, G8) für verschwindende und nicht verschwindende zweidimensionale Verschiebung gleich Null ist,

   - und wobei jedes Datenbit (D) auf den mindestens zwei verschiedenen Einheiten (F1, F2) der ersten Funkressource in Kombination mit einer durch die Spreizung vorgegebenen Anzahl an Einheiten (t1, t2, t3, t4, t5, t6, t7, t8, t9, t10) der zweiten (t) und einer durch die Spreizung vorgegebenen Anzahl an Einheiten (f1, f2, f3, f4, f5, f6, f7, f8, f9, f10) der dritten (f) Funkressource übertragen wird.

2. Verfahren nach Anspruch 1,
   bei dem die zur Spreizung verwendeten Codematrizen ($C^1_1, C^1_2, C^1_3, C^1_4 ; C^1_4, C^1_8, C^1_{12}, C^1_{16}; C^2_1, C^2_2, C^2_3, C^2_4; C^1_1, C^1_2, C^1_3, C^1_4, C^1_5, C^1_6, C^1_7, C^1_8; C^1_1, C^1_2, C^1_3, C^1_4, C^2_1, C^2_2, C^2_3, C^2_4, C^3_1, C^3_2, C^3_3, C^3_4, C^4_1, C^4_2, C^4_3, C^4_4; C^8_1, C^8_3, C^8_3, C^8_4, C^8_5, C^8_6, C^8_7 , C^8_8$) derart beschaffen sind, dass sie über eine Formel herleitbar sind aus einem oder mehreren Sets von Gruppen (g1, g2, g3, g4) von Vektoren ($f^1_1, f^1_2, f^2_1, f^2_2; f^1_1, f^1_2, f^1_3, f^1_4, f^2_1, f^2_2, f^2_3, f^2_4, f^3_1, f^3_2, f^3_3, f^3_4, f^4_1, f^4_2, f^4_3, f^4_4$), wobei

innerhalb eines jeden Sets von Gruppen (g1, g2, g3, g4) von Vektoren

- ■ jede Gruppe von Vektoren eine gleiche Anzahl an nummerierten Vektoren beinhaltet,
- ■ für jede Gruppe die Summe der Autokorrelationen aller Vektoren ausschließlich im Fall verschwindender eindimensionaler Verschiebung ungleich Null ist, und
- ■ für alle Paare an jeweils zwei Gruppen die Summe der Kreuzkorrelationen aller aufgrund ihrer Nummerierung korrespondierender Vektoren der jeweils zwei Gruppen für verschwindende und nicht verschwindende eindimensionale Verschiebung gleich Null ist.

**3.** Verfahren nach einem der Ansprüche 1 oder 2,
bei dem mindestens zwei Teilnehmerstationen des Funkkommunikationssystems eine voneinander unterschiedliche Gruppe (G1, G2, G3, G4, G8) von Codematrizen zugewiesen wird.

**4.** Verfahren nach einem der Ansprüche 1 bis 3,
bei dem mindestens einer Teilnehmerstation eine Gruppe (G1, G2, G3, G4, G8) von Codematrizen und zweite (t) und/oder dritte (f) Funkressourcen zugewiesen werden.

**5.** Verfahren nach einem der Ansprüche 1 bis 4,
bei dem jedes Datenbit (D) für jede Einheit (F1, F2) der ersten Funkressource auf gleichen oder einander entsprechenden Einheiten ((t1, t2, t3, t4, t5, t6, t7, t8, t9, t10), (f1, f2, f3, f4, f5, f6, f7, f8, f9, f10)) der zweiten (t) und der dritten (f) Funkressource übertragen wird.

**6.** Verfahren nach einem der Ansprüche 1 bis 5,
bei dem sich die zur Übertragung von mindestens zwei aufeinanderfolgenden Datenbits (D) für mindestens eine Einheit (F1, F2) der ersten Funkressource verwendeten Einheiten (t1, t2, t3, t4, t5, t6, t7, t8, t9, t10) der zweiten (t) in Kombination mit den Einheiten (f1, f2, f3, f4, f5, f6, f7, f8, f9, f10) der dritten (f) Funkressource teilweise überschneiden.

**7.** Verfahren nach einem der Ansprüche 1 bis 6,
bei dem die zur Übertragung von mindestens zwei aufeinanderfolgenden Datenbits (D) für mindestens eine Einheit (F1, F2) der ersten Funkressource verwendeten Einheiten (t1, t2, t3, t4, t5, t6, t7, t8, t9, t10) der zweiten (t) in Kombination mit den Einheiten (f1, f2, f3, f4, f5, f6, f7, f8, f9, f10) der dritten (f) Funkressource senderseitig nach einem Muster bestimmt werden.

**8.** Verfahren nach einem der Ansprüche 1 bis 6,
bei dem empfängerseitig für die mindestens zwei verschiedenen Einheiten (F1, F2) der ersten Funkressource jeweils Korrelationen zwischen den empfangenen gespreizten Datenbits (D) mit einer Codematrix ($C_1^1$, $C_2^1$, $C_3^1$, $C_4^1$; $C_4^1$, $C_8^1$, $C_{12}^1$, $C_{16}^1$; $C_1^2$, $C_2^2$, $C_3^2$, $C_4^2$; $C_1^1$, $C_2^1$, $C_3^1$, $C_4^1$, $C_5^1$, $C_6^1$, $C_7^1$, $C_8^1$; $C_1^1$, $C_2^1$, $C_3^1$, $C_4^1$, $C_1^2$, $C_2^2$, $C_3^2$, $C_4^2$, $C_1^3$, $C_2^3$, $C_3^3$, $C_4^3$, $C_1^4$, $C_2^4$, $C_3^4$, $C_4^4$; $C_1^8$, $C_2^8$, $C_3^8$, $C_4^8$, $C_5^8$, $C_6^8$, $C_7^8$ , $C_8^8$) der senderseitig verwendeten Gruppe (G1, G2, G3, G4, G8) von Codematrizen und eine Summation von Korrelationsergebnissen über die verschiedenen Einheiten (F1, F2) der ersten Funkressource durchgeführt wird.

**9.** Sendevorrichtung (S) zum Versenden von Datenbits (D) zu einem Empfänger in einem Funkkommunikationssystem,

- mit Mitteln (M1) zum Übertragen eines jeden Datenbits (D) auf mindestens zwei verschiedenen Einheiten (F1, F2) einer ersten Funkressource,
- mit Mitteln (M2) zum Spreizen der Datenbits (D) für jede Einheit (F1, F2) der ersten Funkressource derart, dass jedes Datenbit (D) mit jeweils einer Codematrix ($C_1^1$, $C_2^1$, $C_3^1$, $C_4^1$ ; $C_4^1$, $C_8^1$, $C_{12}^1$, $C_{16}^1$; $C_1^2$, $C_2^2$, $C_3^2$, $C_4^2$; $C_1^1$, $C_2^1$, $C_3^1$, $C_4^1$, $C_5^1$, $C_6^1$, $C_7^1$, $C_8^1$; $C_1^1$, $C_2^1$, $C_3^1$, $C_4^1$, $C_1^2$, $C_2^2$, $C_3^2$, $C_4^2$, $C_1^3$, $C_2^3$, $C_3^3$, $C_4^3$, $C_1^4$, $C_2^4$, $C_3^4$, $C_4^4$ ; $C_1^8$, $C_2^8$, $C_3^8$, $C_4^8$, $C_5^8$, $C_6^8$, $C_7^8$ , $C_8^8$) einer für die Einheiten (F1, F2) der ersten Funkressource gleichen Gruppe (G1, G2, G3, G4, G8) von Codematrizen multipliziert wird,

- wobei die Zeilen der Codematrizen ($C^1_1$, $C^1_2$, $C^1_3$, $C^1_4$; $C^1_4$, $C^1_8$, $C^1_{12}$, $C^1_{16}$; $C^2_1$, $C^2_2$, $C^2_3$, $C^2_4$; $C^1_1$, $C^1_2$, $C^1_3$, $C^1_4$, $C^1_5$, $C^1_6$, $C^1_7$, $C^1_8$; $C^1_1$, $C^1_2$, $C^1_3$, $C^1_4$, $C^2_1$, $C^2_2$, $C^2_3$, $C^2_4$, $C^3_1$, $C^3_2$, $C^3_3$, $C^3_4$, $C^4_1$, $C^4_2$, $C^4_3$, $C^4_4$ ; $C^8_1$, $C^8_2$, $C^8_3$, $C^8_4$, $C^8_5$, $C^8_6$, $C^8_7$ , $C^8_8$) jeweils einen Spreizcode bezüglich einer dritten Funkressource (f) darstellen,
- wobei die zur Spreizung verwendeten Codematrizen ($C^1_1$, $C^1_2$, $C^1_3$, $C^1_4$ ; $C^1_4$, $C^1_8$, $C^1_{12}$, $C^1_{16}$; $C^2_1$, $C^2_2$, $C^2_3$, $C^2_4$; $C^1_1$, $C^1_2$, $C^1_3$, $C^1_4$, $C^1_5$, $C^1_6$, $C^1_7$, $C^1_8$; $C^1_1$, $C^1_2$, $C^1_3$, $C^1_4$, $C^2_1$, $C^2_2$, $C^2_3$, $C^2_4$, $C^3_1$, $C^3_2$, $C^3_3$, $C^3_4$, $C^4_1$, $C^4_2$, $C^4_3$, $C^4_4$ ; $C^8_1$, $C^8_2$, $C^8_3$, $C^8_4$, $C^8_5$, $C^8_6$, $C^8_7$ , $C^8_8$) derart beschaffen sind, dass

  - mindestens zwei Gruppen (G1, G2, G3, G4, G8) von Codematrizen vorliegen, wobei jede Gruppe (G1, G2, G3, G4, G8) eine gleiche Anzahl an nummerierten Codematrizen beinhaltet,
  - für jede Gruppe (G1, G2, G3, G4, G8) die Summe der Autokorrelationen aller Codematrizen ausschließlich im Fall verschwindender zweidimensionaler Verschiebung ungleich Null ist, und
  - für alle Paare an jeweils zwei Gruppen (G1, G2, G3, G4, G8) die Summe der Kreuzkorrelationen aller aufgrund ihrer Nummerierung korrespondierender Codematrizen der jeweils zwei Gruppen (G1, G2, G3, G4, G8) für verschwindende und nicht verschwindende zweidimensionale Verschiebung gleich Null ist,

- und mit Mitteln (M3) zum Übertragen eines jeden Datenbits (D) auf den mindestens zwei verschiedenen Einheiten (F1, F2) der ersten Funkressource in Kombination mit einer durch die Spreizung vorgegebenen Anzahl an Einheiten (t1, t2, t3, t4, t5, t6, t7, t8, t9, t10) der zweiten (t) und einer durch die Spreizung vorgegebenen Anzahl an Einheiten (f1, f2, f3, f4, f5, f6, f7, f8, f9, f10) der dritten (f) Funkressource.

**10.** Empfangsvorrichtung (E) zur Verarbeitung von gemäß dem Verfahren nach Anspruch 1 übertragenen Datenbits (D) mit Mitteln (M4) zum Berechnen von Korrelationen jeweils für die mindestens zwei verschiedenen Einheiten (F1, F2) der ersten Funkressource zwischen den empfangenen gespreizten Datenbits (D) mit einer Codematrix ($C^1_1$, $C^1_2$, $C^1_3$, $C^1_4$ ; $C^1_4$, $C^1_8$, $C^1_{12}$, $C^1_{16}$; $C^2_1$, $C^2_2$, $C^2_3$, $C^2_4$; $C^1_1$, $C^1_2$, $C^1_3$, $C^1_4$, $C^1_5$, $C^1_6$, $C^1_7$, $C^1_8$; $C^1_1$, $C^1_2$, $C^1_3$, $C^1_4$, $C^2_1$, $C^2_2$, $C^2_3$, $C^2_4$, $C^3_1$, $C^3_2$, $C^3_3$, $C^3_4$, $C^4_1$, $C^4_2$, $C^4_3$, $C^4_4$ ; $C^8_1$, $C^8_2$, $C^8_3$, $C^8_4$, $C^8_5$, $C^8_6$, $C^8_7$ , $C^8_8$) der senderseitig verwendeten Gruppe (G1, G2, G3, G4, G8) von Codematrizen
und mit Mitteln (M5) zum Berechnen von Summen von Korrelationsergebnissen über die verschiedenen Einheiten (F1, F2) der ersten Funkressource.

FIG 1

$$\left.\begin{array}{l} f_1^1=(+1,\ +1,\ +1,\ -1) \\ f_2^1=(+1,\ -1,\ +1,+1) \end{array}\right\} g1$$

$$\left.\begin{array}{l} f_1^2=(+1,\ +1,\ -1,+1) \\ f_2^2=(+1,\ -1,\ -1,-1) \end{array}\right\} g2$$

FIG 2 Stand der Technik

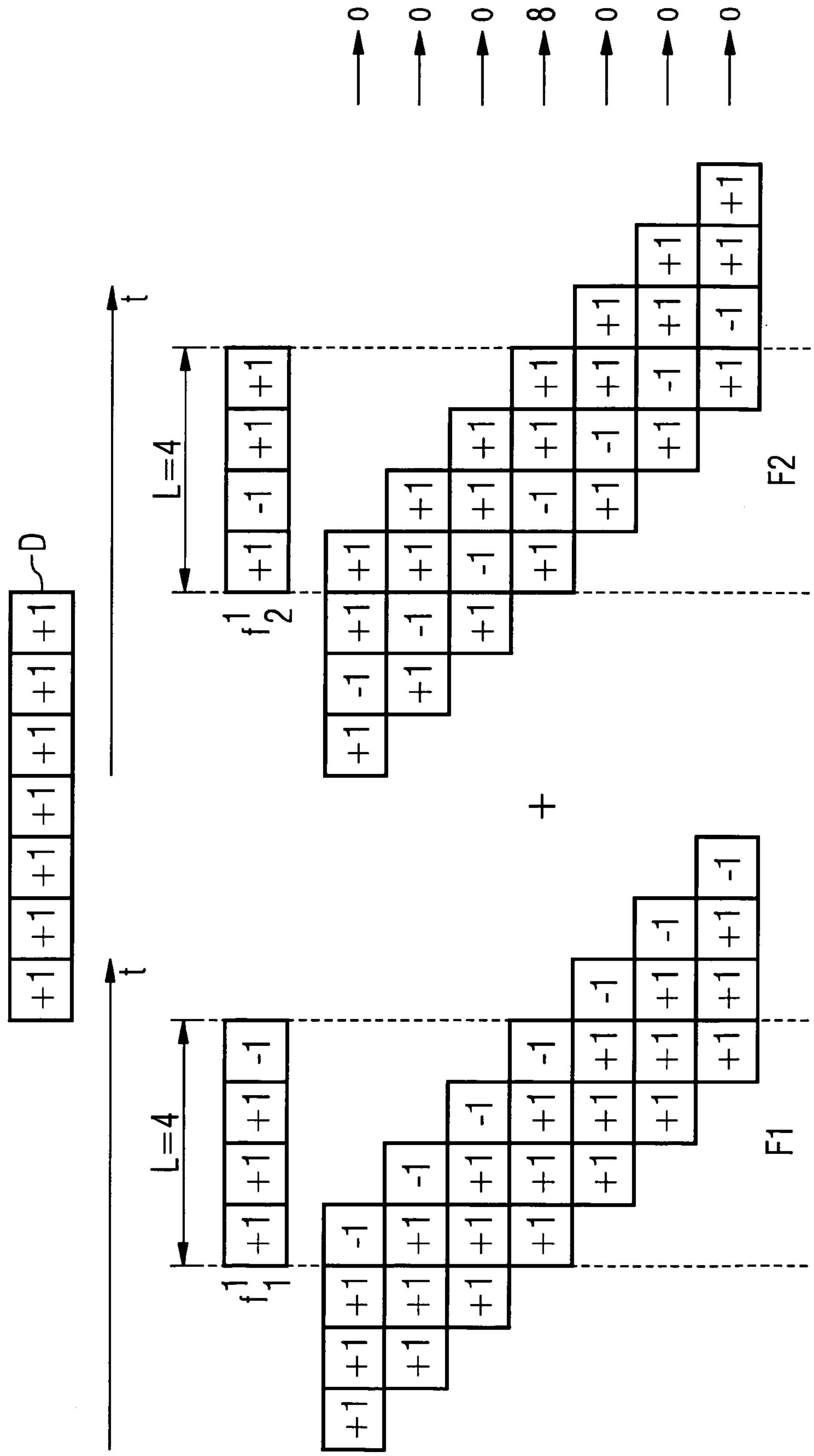

FIG 3

$$c_1^1 = \begin{pmatrix} 1 & -1 & 1 & 1 \\ -1 & 1 & -1 & -1 \\ 1 & -1 & 1 & 1 \\ 1 & -1 & 1 & 1 \end{pmatrix} \qquad c_2^1 = \begin{pmatrix} 1 & 1 & 1 & -1 \\ -1 & -1 & -1 & 1 \\ 1 & 1 & 1 & -1 \\ 1 & 1 & 1 & -1 \end{pmatrix}$$

G1

$$c_3^1 = \begin{pmatrix} 1 & -1 & 1 & 1 \\ 1 & -1 & 1 & 1 \\ 1 & -1 & 1 & 1 \\ -1 & 1 & -1 & -1 \end{pmatrix} \qquad c_4^1 = \begin{pmatrix} 1 & 1 & 1 & -1 \\ 1 & 1 & 1 & -1 \\ 1 & 1 & 1 & -1 \\ -1 & -1 & -1 & 1 \end{pmatrix}$$

FIG 4

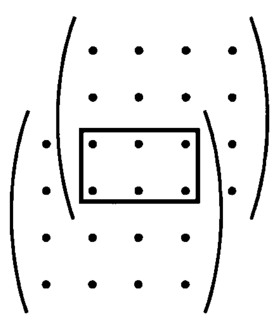

# FIG 5

| | | | | | | | | | | | | | | | | |
|---|---|---|---|---|---|---|---|---|---|---|---|---|---|---|---|---|
| $f^1_1=$ | 1 | -1 | 1 | -1 | -1 | -1 | 1 | 1 | -1 | 1 | 1 | -1 | -1 | -1 | -1 | -1 |
| $f^1_2=$ | 1 | 1 | -1 | -1 | -1 | 1 | -1 | 1 | -1 | -1 | -1 | -1 | -1 | 1 | 1 | -1 |
| $f^1_3=$ | -1 | -1 | -1 | -1 | 1 | -1 | -1 | 1 | 1 | 1 | -1 | -1 | 1 | -1 | 1 | -1 |
| $f^1_4=$ | -1 | 1 | 1 | -1 | 1 | 1 | 1 | 1 | 1 | -1 | 1 | -1 | 1 | 1 | -1 | -1 |

g1

| | | | | | | | | | | | | | | | | |
|---|---|---|---|---|---|---|---|---|---|---|---|---|---|---|---|---|
| $f^2_1=$ | 1 | -1 | 1 | -1 | 1 | 1 | -1 | -1 | 1 | -1 | -1 | 1 | -1 | -1 | -1 | -1 |
| $f^2_2=$ | 1 | 1 | -1 | -1 | 1 | -1 | 1 | -1 | 1 | 1 | 1 | 1 | -1 | 1 | 1 | -1 |
| $f^2_3=$ | -1 | -1 | -1 | -1 | -1 | 1 | 1 | -1 | -1 | -1 | 1 | 1 | 1 | -1 | 1 | -1 |
| $f^2_4=$ | -1 | 1 | 1 | -1 | -1 | -1 | -1 | -1 | -1 | 1 | -1 | 1 | 1 | 1 | -1 | -1 |

g2

| | | | | | | | | | | | | | | | | |
|---|---|---|---|---|---|---|---|---|---|---|---|---|---|---|---|---|
| $f^3_1=$ | 1 | -1 | 1 | -1 | 1 | 1 | -1 | -1 | -1 | 1 | 1 | -1 | 1 | 1 | 1 | 1 |
| $f^3_2=$ | 1 | 1 | -1 | -1 | 1 | -1 | 1 | -1 | -1 | -1 | -1 | -1 | 1 | -1 | -1 | 1 |
| $f^3_3=$ | -1 | -1 | -1 | -1 | -1 | 1 | 1 | -1 | 1 | 1 | -1 | -1 | -1 | 1 | -1 | 1 |
| $f^3_4=$ | -1 | 1 | 1 | -1 | -1 | -1 | -1 | -1 | 1 | -1 | 1 | -1 | -1 | -1 | 1 | 1 |

g3

| | | | | | | | | | | | | | | | | |
|---|---|---|---|---|---|---|---|---|---|---|---|---|---|---|---|---|
| $f^4_1=$ | 1 | -1 | 1 | -1 | -1 | -1 | 1 | 1 | 1 | -1 | -1 | 1 | 1 | 1 | 1 | 1 |
| $f^4_2=$ | 1 | 1 | -1 | -1 | -1 | 1 | -1 | 1 | 1 | 1 | 1 | 1 | 1 | -1 | -1 | 1 |
| $f^4_3=$ | -1 | -1 | -1 | -1 | 1 | -1 | -1 | 1 | -1 | -1 | 1 | 1 | -1 | 1 | -1 | 1 |
| $f^4_4=$ | -1 | 1 | 1 | -1 | 1 | 1 | 1 | 1 | -1 | 1 | -1 | 1 | -1 | -1 | 1 | 1 |

g4

FIG 6A

G1

$C_8^1 =$

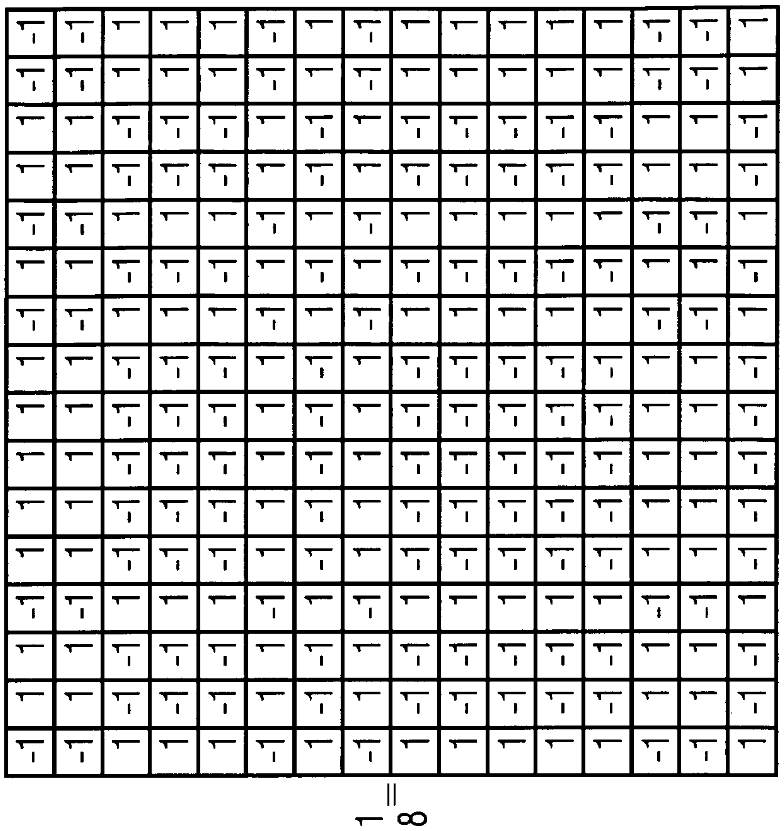

$C_4^1 =$

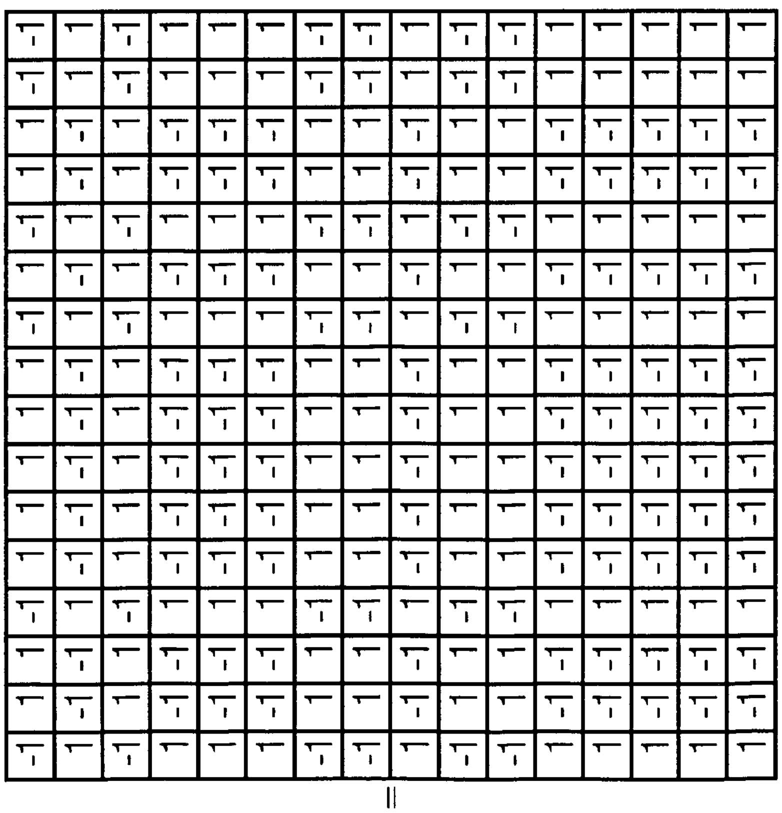

FIG 6B

$C^1_{12}=$

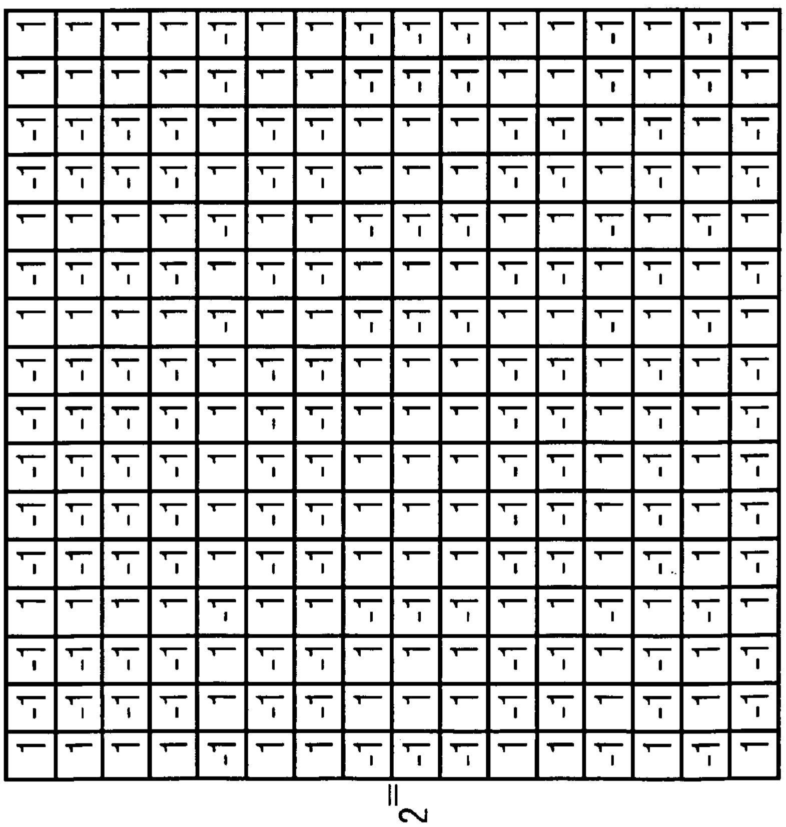

$C^1_{16}=$

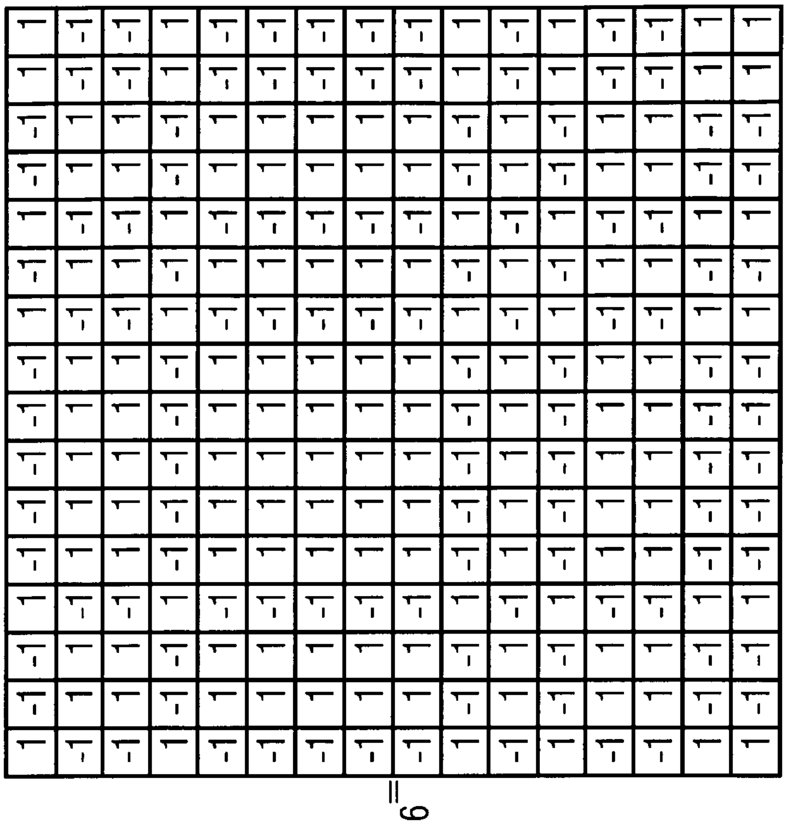

FIG 7

| | | | | | |
|---|---|---|---|---|---|
| $f_1^1=$ | (1,0) | (-1,0) | (0,-1) | (0,-1) | g1 |
| $f_2^1=$ | (-1,0) | (-1,0) | (0,1) | (0,-1) | |

| | | | | | |
|---|---|---|---|---|---|
| $f_1^2=$ | (-1,0) | (1,0) | (0,-1) | (0,-1) | g2 |
| $f_2^2=$ | (1,0) | (1,0) | (0,1) | (0,-1) | |

## FIG 8

### G1

$C_1^1 =$

| | | | |
|---|---|---|---|
| (1,0) | (1,0) | (0,-1) | (0,1) |
| (1,0) | (1,0) | (0,-1) | (0,1) |
| (0,-1) | (0,-1) | (-1,0) | (1,0) |
| (0,1) | (0,1) | (1,0) | (-1,0) |

$C_2^1 =$

| | | | |
|---|---|---|---|
| (-1,0) | (1,0) | (0,1) | (0,1) |
| (-1,0) | (1,0) | (0,1) | (0,1) |
| (0,1) | (0,-1) | (1,0) | (1,0) |
| (0,-1) | (0,1) | (-1,0) | (-1,0) |

$C_3^1 =$

| | | | |
|---|---|---|---|
| (-1,0) | (-1,0) | (0,1) | (0,-1) |
| (1,0) | (1,0) | (0,-1) | (0,1) |
| (0,1) | (0,1) | (1,0) | (-1,0) |
| (0,1) | (0,1) | (1,0) | (-1,0) |

$C_4^1 =$

| | | | |
|---|---|---|---|
| (1,0) | (-1,0) | (0,-1) | (0,-1) |
| (-1,0) | (1,0) | (0,1) | (0,1) |
| (0,-1) | (0,1) | (-1,0) | (-1,0) |
| (0,-1) | (0,1) | (-1,0) | (-1,0) |

### G2

$C_1^2 =$

| | | | |
|---|---|---|---|
| (1,0) | (1,0) | (0,1) | (0,-1) |
| (1,0) | (1,0) | (0,1) | (0,-1) |
| (0,1) | (0,1) | (-1,0) | (1,0) |
| (0,-1) | (0,-1) | (1,0) | (-1,0) |

$C_2^2 =$

| | | | |
|---|---|---|---|
| (-1,0) | (1,0) | (0,-1) | (0,-1) |
| (-1,0) | (1,0) | (0,-1) | (0,-1) |
| (0,-1) | (0,1) | (1,0) | (1,0) |
| (0,1) | (0,-1) | (-1,0) | (-1,0) |

$C_3^2 =$

| | | | |
|---|---|---|---|
| (-1,0) | (-1,0) | (0,-1) | (0,1) |
| (1,0) | (1,0) | (0,1) | (0,-1) |
| (0,-1) | (0,-1) | (1,0) | (-1,0) |
| (0,-1) | (0,-1) | (1,0) | (-1,0) |

$C_4^2 =$

| | | | |
|---|---|---|---|
| (1,0) | (-1,0) | (0,1) | (0,1) |
| (-1,0) | (1,0) | (0,-1) | (0,-1) |
| (0,1) | (0,-1) | (-1,0) | (-1,0) |
| (0,1) | (0,-1) | (-1,0) | (-1,0) |

## FIG 9

$$C_1^1 = \begin{bmatrix} 1 & 1 & e^{j\frac{3\pi}{2}} & e^{j\frac{\pi}{2}} \\ 1 & 1 & e^{j\frac{3\pi}{2}} & e^{j\frac{\pi}{2}} \\ e^{j\frac{3\pi}{2}} & e^{j\frac{3\pi}{2}} & -1 & 1 \\ e^{j\frac{\pi}{2}} & e^{j\frac{\pi}{2}} & 1 & -1 \end{bmatrix}$$

# FIG 10

$C_1^1 =$

| | | | | | | | | | | | | | | | |
|---|---|---|---|---|---|---|---|---|---|---|---|---|---|---|---|
| 1 | -1 | 1 | -1 | -1 | -1 | 1 | 1 | -1 | 1 | 1 | -1 | -1 | -1 | -1 | -1 |
| -1 | 1 | -1 | 1 | 1 | 1 | -1 | -1 | 1 | -1 | -1 | 1 | 1 | 1 | 1 | 1 |
| -1 | 1 | -1 | 1 | 1 | 1 | -1 | -1 | 1 | -1 | -1 | 1 | 1 | 1 | 1 | 1 |
| -1 | 1 | -1 | 1 | 1 | 1 | -1 | -1 | 1 | -1 | -1 | 1 | 1 | 1 | 1 | 1 |

$C_2^1 =$

| | | | | | | | | | | | | | | | |
|---|---|---|---|---|---|---|---|---|---|---|---|---|---|---|---|
| 1 | 1 | -1 | -1 | -1 | 1 | -1 | 1 | -1 | -1 | -1 | -1 | -1 | 1 | 1 | -1 |
| -1 | -1 | 1 | 1 | 1 | -1 | 1 | -1 | 1 | 1 | 1 | 1 | 1 | -1 | -1 | 1 |
| -1 | -1 | 1 | 1 | 1 | -1 | 1 | -1 | 1 | 1 | 1 | 1 | 1 | -1 | -1 | 1 |
| -1 | -1 | 1 | 1 | 1 | -1 | 1 | -1 | 1 | 1 | 1 | 1 | 1 | -1 | -1 | 1 |

$C_3^1 =$

| | | | | | | | | | | | | | | | |
|---|---|---|---|---|---|---|---|---|---|---|---|---|---|---|---|
| -1 | -1 | -1 | -1 | 1 | -1 | -1 | 1 | 1 | 1 | -1 | -1 | 1 | -1 | 1 | -1 |
| 1 | 1 | 1 | 1 | -1 | 1 | 1 | -1 | -1 | -1 | 1 | 1 | -1 | 1 | -1 | 1 |
| 1 | 1 | 1 | 1 | -1 | 1 | 1 | -1 | -1 | -1 | 1 | 1 | -1 | 1 | -1 | 1 |
| 1 | 1 | 1 | 1 | -1 | 1 | 1 | -1 | -1 | -1 | 1 | 1 | -1 | 1 | -1 | 1 |

$C_4^1 =$

| | | | | | | | | | | | | | | | |
|---|---|---|---|---|---|---|---|---|---|---|---|---|---|---|---|
| -1 | 1 | 1 | -1 | 1 | 1 | 1 | 1 | 1 | -1 | 1 | -1 | 1 | 1 | -1 | -1 |
| 1 | -1 | -1 | 1 | -1 | -1 | -1 | -1 | -1 | 1 | -1 | 1 | -1 | -1 | 1 | 1 |
| 1 | -1 | -1 | 1 | -1 | -1 | -1 | -1 | -1 | 1 | -1 | 1 | -1 | -1 | 1 | 1 |
| 1 | -1 | -1 | 1 | -1 | -1 | -1 | -1 | -1 | 1 | -1 | 1 | -1 | -1 | 1 | 1 |

G1

$C_5^1 =$

| | | | | | | | | | | | | | | | |
|---|---|---|---|---|---|---|---|---|---|---|---|---|---|---|---|
| 1 | -1 | 1 | -1 | -1 | -1 | 1 | 1 | -1 | 1 | 1 | -1 | -1 | -1 | -1 | -1 |
| 1 | -1 | 1 | -1 | -1 | -1 | 1 | 1 | -1 | 1 | 1 | -1 | -1 | -1 | -1 | -1 |
| -1 | 1 | -1 | 1 | 1 | 1 | -1 | -1 | 1 | -1 | -1 | 1 | 1 | 1 | 1 | 1 |
| 1 | -1 | 1 | -1 | -1 | -1 | 1 | 1 | -1 | 1 | 1 | -1 | -1 | -1 | -1 | -1 |

$C_6^1 =$

| | | | | | | | | | | | | | | | |
|---|---|---|---|---|---|---|---|---|---|---|---|---|---|---|---|
| 1 | 1 | -1 | -1 | -1 | 1 | -1 | 1 | -1 | -1 | -1 | -1 | -1 | 1 | 1 | -1 |
| 1 | 1 | -1 | -1 | -1 | 1 | -1 | 1 | -1 | -1 | -1 | -1 | -1 | 1 | 1 | -1 |
| -1 | -1 | 1 | 1 | 1 | -1 | 1 | -1 | 1 | 1 | 1 | 1 | 1 | -1 | -1 | 1 |
| 1 | 1 | -1 | -1 | -1 | 1 | -1 | 1 | -1 | -1 | -1 | -1 | -1 | 1 | 1 | -1 |

$C_7^1 =$

| | | | | | | | | | | | | | | | |
|---|---|---|---|---|---|---|---|---|---|---|---|---|---|---|---|
| -1 | -1 | -1 | -1 | 1 | -1 | -1 | 1 | 1 | 1 | -1 | -1 | 1 | -1 | 1 | -1 |
| -1 | -1 | -1 | -1 | 1 | -1 | -1 | 1 | 1 | 1 | -1 | -1 | 1 | -1 | 1 | -1 |
| 1 | 1 | 1 | 1 | -1 | 1 | 1 | -1 | -1 | -1 | 1 | 1 | -1 | 1 | -1 | 1 |
| -1 | -1 | -1 | -1 | 1 | -1 | -1 | 1 | 1 | 1 | -1 | -1 | 1 | -1 | 1 | -1 |

$C_8^1 =$

| | | | | | | | | | | | | | | | |
|---|---|---|---|---|---|---|---|---|---|---|---|---|---|---|---|
| -1 | 1 | 1 | -1 | 1 | 1 | 1 | 1 | 1 | -1 | 1 | -1 | 1 | 1 | -1 | -1 |
| -1 | 1 | 1 | -1 | 1 | 1 | 1 | 1 | 1 | -1 | 1 | -1 | 1 | 1 | -1 | -1 |
| 1 | -1 | -1 | 1 | -1 | -1 | -1 | -1 | -1 | 1 | -1 | 1 | -1 | -1 | 1 | 1 |
| -1 | 1 | 1 | -1 | 1 | 1 | 1 | 1 | 1 | -1 | 1 | -1 | 1 | 1 | -1 | -1 |

# FIG 11A

| | | | | | | | | | | | | | | | | |
|---|---|---|---|---|---|---|---|---|---|---|---|---|---|---|---|---|
| $f_1^1 =$ | (-1,0) | (1,0) | (-1,0) | (1,0) | (0,-1) | (-1,0) | (0,1) | (1,0) | (1,0) | (1,0) | (1,0) | (1,0) | (0,-1) | (1,0) | (0,1) | (-1,0) |
| $f_2^1 =$ | (1,0) | (0,1) | (-1,0) | (0,-1) | (0,1) | (0,-1) | (0,1) | (0,-1) | (-1,0) | (0,1) | (1,0) | (0,-1) | (0,1) | (0,1) | (0,1) | (0,1) |
| $f_3^1 =$ | (1,0) | (1,0) | (1,0) | (1,0) | (0,1) | (-1,0) | (0,-1) | (1,0) | (-1,0) | (1,0) | (-1,0) | (1,0) | (0,1) | (1,0) | (0,-1) | (-1,0) |
| $f_4^1 =$ | (1,0) | (0,-1) | (-1,0) | (0,1) | (0,1) | (0,1) | (0,1) | (0,1) | (-1,0) | (0,-1) | (1,0) | (0,1) | (0,1) | (0,-1) | (0,1) | (0,-1) |

g1

| | | | | | | | | | | | | | | | | |
|---|---|---|---|---|---|---|---|---|---|---|---|---|---|---|---|---|
| $f_1^2 =$ | (1,0) | (-1,0) | (1,0) | (-1,0) | (0,-1) | (-1,0) | (0,1) | (1,0) | (-1,0) | (-1,0) | (-1,0) | (-1,0) | (0,-1) | (1,0) | (0,1) | (-1,0) |
| $f_2^2 =$ | (-1,0) | (0,-1) | (1,0) | (0,1) | (0,1) | (0,-1) | (0,1) | (0,-1) | (1,0) | (0,-1) | (-1,0) | (0,1) | (0,1) | (0,1) | (0,1) | (0,1) |
| $f_3^2 =$ | (-1,0) | (-1,0) | (-1,0) | (-1,0) | (0,1) | (-1,0) | (0,-1) | (1,0) | (1,0) | (-1,0) | (1,0) | (-1,0) | (0,1) | (1,0) | (0,-1) | (-1,0) |
| $f_4^2 =$ | (-1,0) | (0,1) | (1,0) | (0,-1) | (0,1) | (0,1) | (0,1) | (0,1) | (1,0) | (0,1) | (-1,0) | (0,-1) | (0,1) | (0,-1) | (0,1) | (0,-1) |

g2

# FIG 11B

| | | | | | | | | | | | | | | | | |
|---|---|---|---|---|---|---|---|---|---|---|---|---|---|---|---|---|
| $f^3_1$= | (1,0) | (-1,0) | (1,0) | (-1,0) | (-1,0) | (0,1) | (1,0) | (0,-1) | (1,0) | (1,0) | (1,0) | (1,0) | (1,0) | (0,1) | (-1,0) | (0,-1) |
| $f^3_2$= | (-1,0) | (0,-1) | (1,0) | (0,1) | (1,0) | (-1,0) | (1,0) | (-1,0) | (-1,0) | (0,1) | (1,0) | (0,-1) | (-1,0) | (-1,0) | (-1,0) | (-1,0) |
| $f^3_3$= | (-1,0) | (-1,0) | (-1,0) | (-1,0) | (1,0) | (0,1) | (-1,0) | (0,-1) | (-1,0) | (1,0) | (-1,0) | (1,0) | (-1,0) | (0,1) | (1,0) | (0,-1) |
| $f^3_4$= | (-1,0) | (0,1) | (1,0) | (0,-1) | (1,0) | (1,0) | (1,0) | (1,0) | (-1,0) | (0,-1) | (1,0) | (0,1) | (-1,0) | (1,0) | (-1,0) | (1,0) |

g3

| | | | | | | | | | | | | | | | | |
|---|---|---|---|---|---|---|---|---|---|---|---|---|---|---|---|---|
| $f^4_1$= | (1,0) | (-1,0) | (1,0) | (-1,0) | (1,0) | (0,-1) | (-1,0) | (0,1) | (1,0) | (1,0) | (1,0) | (1,0) | (-1,0) | (0,-1) | (1,0) | (0,1) |
| $f^4_2$= | (-1,0) | (0,-1) | (1,0) | (0,1) | (-1,0) | (1,0) | (-1,0) | (1,0) | (-1,0) | (0,1) | (1,0) | (0,-1) | (1,0) | (1,0) | (1,0) | (1,0) |
| $f^4_3$= | (-1,0) | (-1,0) | (-1,0) | (-1,0) | (-1,0) | (0,-1) | (1,0) | (0,1) | (-1,0) | (1,0) | (-1,0) | (1,0) | (1,0) | (0,-1) | (-1,0) | (0,1) |
| $f^4_4$= | (-1,0) | (0,1) | (1,0) | (0,-1) | (-1,0) | (-1,0) | (-1,0) | (-1,0) | (-1,0) | (0,-1) | (1,0) | (0,1) | (1,0) | (-1,0) | (1,0) | (-1,0) |

g4

# FIG 12A

$C_1^1 =$

| | | | | | | | | | | | | | | | |
|---|---|---|---|---|---|---|---|---|---|---|---|---|---|---|---|
| (1,0) | (-1,0) | (1,0) | (-1,0) | (0,1) | (1,0) | (0,-1) | (-1,0) | (-1,0) | (-1,0) | (-1,0) | (-1,0) | (0,1) | (-1,0) | (0,-1) | (1,0) |
| (-1,0) | (1,0) | (-1,0) | (1,0) | (0,-1) | (-1,0) | (0,1) | (1,0) | (1,0) | (1,0) | (1,0) | (1,0) | (0,-1) | (1,0) | (0,1) | (-1,0) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |

$C_2^1 =$

| | | | | | | | | | | | | | | | |
|---|---|---|---|---|---|---|---|---|---|---|---|---|---|---|---|
| (-1,0) | (0,-1) | (1,0) | (0,1) | (0,-1) | (0,1) | (0,-1) | (0,1) | (1,0) | (0,-1) | (-1,0) | (0,1) | (0,-1) | (0,-1) | (0,-1) | (0,-1) |
| (1,0) | (0,1) | (-1,0) | (0,-1) | (0,1) | (0,-1) | (0,1) | (0,-1) | (-1,0) | (0,1) | (1,0) | (0,-1) | (0,1) | (0,1) | (0,1) | (0,1) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |

$C_3^1 =$

| | | | | | | | | | | | | | | | |
|---|---|---|---|---|---|---|---|---|---|---|---|---|---|---|---|
| (-1,0) | (-1,0) | (-1,0) | (-1,0) | (0,-1) | (1,0) | (0,1) | (-1,0) | (1,0) | (-1,0) | (1,0) | (-1,0) | (0,-1) | (-1,0) | (0,1) | (1,0) |
| (1,0) | (1,0) | (1,0) | (1,0) | (0,1) | (-1,0) | (0,-1) | (1,0) | (-1,0) | (1,0) | (-1,0) | (1,0) | (0,1) | (1,0) | (0,-1) | (-1,0) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |

$C_4^1 =$

| | | | | | | | | | | | | | | | |
|---|---|---|---|---|---|---|---|---|---|---|---|---|---|---|---|
| (-1,0) | (0,1) | (1,0) | (0,-1) | (0,-1) | (0,-1) | (0,-1) | (0,-1) | (1,0) | (0,1) | (-1,0) | (0,-1) | (0,-1) | (0,1) | (0,-1) | (0,1) |
| (1,0) | (0,-1) | (-1,0) | (0,1) | (0,1) | (0,1) | (0,1) | (0,1) | (-1,0) | (0,-1) | (1,0) | (0,1) | (0,1) | (0,-1) | (0,1) | (0,-1) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |

$C_5^1 =$

| | | | | | | | | | | | | | | | |
|---|---|---|---|---|---|---|---|---|---|---|---|---|---|---|---|
| (-1,0) | (1,0) | (-1,0) | (1,0) | (0,-1) | (-1,0) | (0,1) | (1,0) | (1,0) | (1,0) | (1,0) | (1,0) | (0,-1) | (1,0) | (0,1) | (-1,0) |
| (-1,0) | (1,0) | (-1,0) | (1,0) | (0,-1) | (-1,0) | (0,1) | (1,0) | (1,0) | (1,0) | (1,0) | (1,0) | (0,-1) | (1,0) | (0,1) | (-1,0) |
| (0,-1) | (0,1) | (0,-1) | (0,1) | (1,0) | (0,-1) | (-1,0) | (0,1) | (0,1) | (0,1) | (0,1) | (0,1) | (1,0) | (0,1) | (-1,0) | (0,-1) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |

$C_6^1 =$

| | | | | | | | | | | | | | | | |
|---|---|---|---|---|---|---|---|---|---|---|---|---|---|---|---|
| (1,0) | (0,1) | (-1,0) | (0,-1) | (0,1) | (0,-1) | (0,1) | (0,-1) | (-1,0) | (0,1) | (1,0) | (0,-1) | (0,1) | (0,1) | (0,1) | (0,1) |
| (1,0) | (0,1) | (-1,0) | (0,-1) | (0,1) | (0,-1) | (0,1) | (0,-1) | (-1,0) | (0,1) | (1,0) | (0,-1) | (0,1) | (0,1) | (0,1) | (0,1) |
| (0,1) | (-1,0) | (0,-1) | (1,0) | (-1,0) | (1,0) | (-1,0) | (1,0) | (0,-1) | (-1,0) | (0,1) | (1,0) | (-1,0) | (-1,0) | (-1,0) | (-1,0) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |

# FIG 12B

$C_7^1 =$

| | | | | | | | | | | | | | | | |
|---|---|---|---|---|---|---|---|---|---|---|---|---|---|---|---|
| (1,0) | (1,0) | (1,0) | (1,0) | (0,1) | (-1,0) | (0,-1) | (1,0) | (-1,0) | (1,0) | (-1,0) | (1,0) | (0,1) | (1,0) | (0,-1) | (-1,0) |
| (1,0) | (1,0) | (1,0) | (1,0) | (0,1) | (-1,0) | (0,-1) | (1,0) | (-1,0) | (1,0) | (-1,0) | (1,0) | (0,1) | (1,0) | (0,-1) | (-1,0) |
| (0,1) | (0,1) | (0,1) | (0,1) | (-1,0) | (0,-1) | (1,0) | (0,1) | (0,-1) | (0,1) | (0,-1) | (0,1) | (-1,0) | (0,1) | (1,0) | (0,-1) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |

$C_8^1 =$

| | | | | | | | | | | | | | | | |
|---|---|---|---|---|---|---|---|---|---|---|---|---|---|---|---|
| (1,0) | (0,-1) | (-1,0) | (0,1) | (0,1) | (0,1) | (0,1) | (0,1) | (-1,0) | (0,-1) | (1,0) | (0,1) | (0,1) | (0,-1) | (0,1) | (0,-1) |
| (1,0) | (0,-1) | (-1,0) | (0,1) | (0,1) | (0,1) | (0,1) | (0,1) | (-1,0) | (0,-1) | (1,0) | (0,1) | (0,1) | (0,-1) | (0,1) | (0,-1) |
| (0,1) | (1,0) | (0,-1) | (-1,0) | (-1,0) | (-1,0) | (-1,0) | (-1,0) | (0,-1) | (1,0) | (0,1) | (-1,0) | (-1,0) | (1,0) | (-1,0) | (1,0) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |

G1

FIG 13

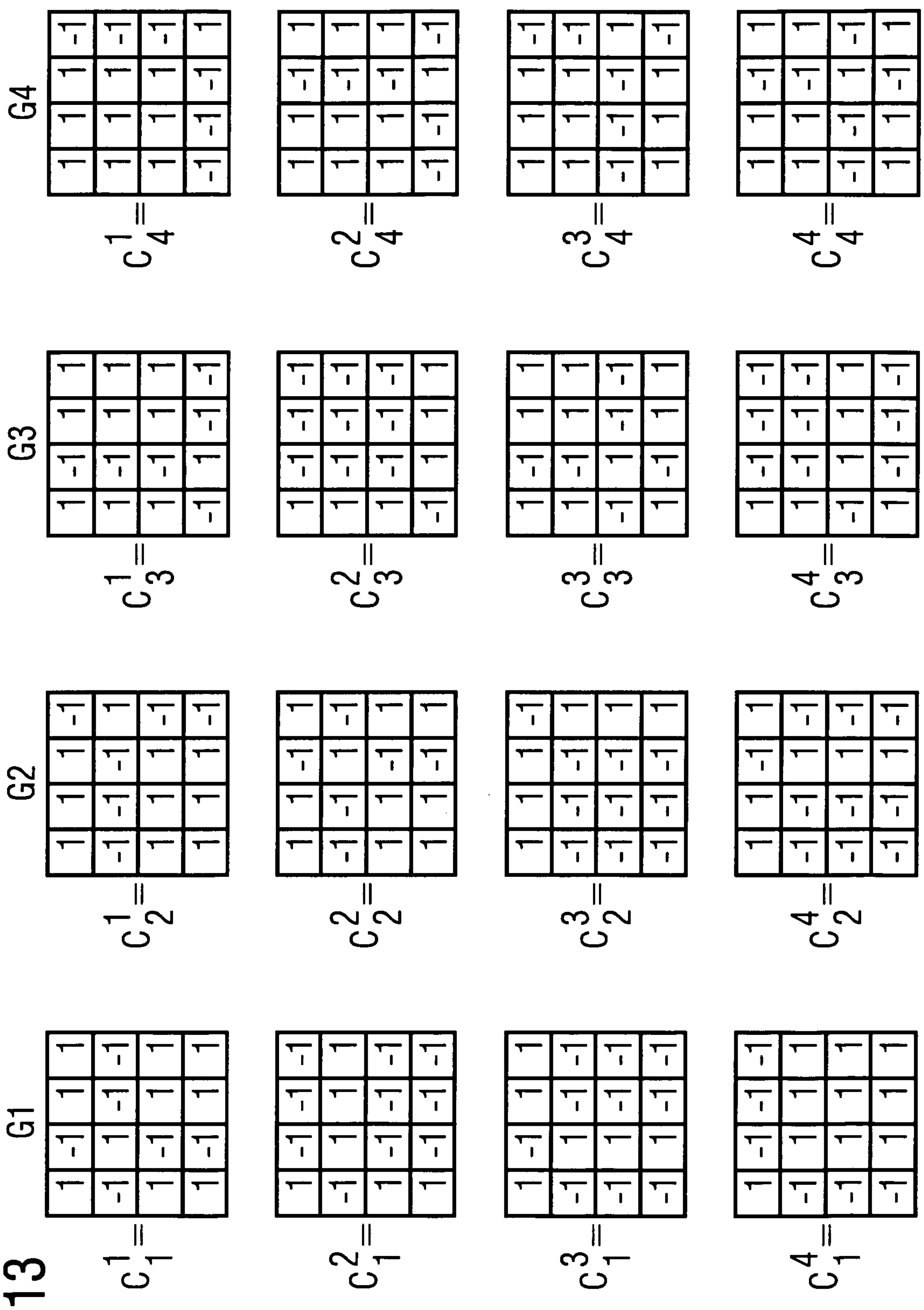

## FIG 14

### G1

$C_1^1 =$

| | | | |
|---|---|---|---|
| (1,0) | (1,0) | (0,-1) | (0,1) |
| (1,0) | (1,0) | (0,-1) | (0,1) |
| (0,-1) | (0,-1) | (-1,0) | (1,0) |
| (0,1) | (0,1) | (1,0) | (-1,0) |

$C_1^2 =$

| | | | |
|---|---|---|---|
| (-1,0) | (-1,0) | (0,-1) | (0,1) |
| (-1,0) | (-1,0) | (0,-1) | (0,1) |
| (0,1) | (0,1) | (-1,0) | (1,0) |
| (0,-1) | (0,-1) | (1,0) | (-1,0) |

$C_1^3 =$

| | | | |
|---|---|---|---|
| (-1,0) | (-1,0) | (0,1) | (0,-1) |
| (-1,0) | (-1,0) | (0,1) | (0,-1) |
| (0,-1) | (0,-1) | (-1,0) | (1,0) |
| (0,1) | (0,1) | (1,0) | (-1,0) |

$C_1^4 =$

| | | | |
|---|---|---|---|
| (1,0) | (1,0) | (0,1) | (0,-1) |
| (1,0) | (1,0) | (0,1) | (0,-1) |
| (0,1) | (0,1) | (-1,0) | (1,0) |
| (0,-1) | (0,-1) | (1,0) | (-1,0) |

### G2

$C_2^1 =$

| | | | |
|---|---|---|---|
| (-1,0) | (1,0) | (0,1) | (0,1) |
| (-1,0) | (1,0) | (0,1) | (0,1) |
| (0,1) | (0,-1) | (1,0) | (1,0) |
| (0,-1) | (0,1) | (-1,0) | (-1,0) |

$C_2^2 =$

| | | | |
|---|---|---|---|
| (1,0) | (-1,0) | (0,1) | (0,1) |
| (1,0) | (-1,0) | (0,1) | (0,1) |
| (0,-1) | (0,1) | (1,0) | (1,0) |
| (0,1) | (0,-1) | (-1,0) | (-1,0) |

$C_2^3 =$

| | | | |
|---|---|---|---|
| (1,0) | (-1,0) | (0,-1) | (0,-1) |
| (1,0) | (-1,0) | (0,-1) | (0,-1) |
| (0,1) | (0,-1) | (1,0) | (1,0) |
| (0,-1) | (0,1) | (-1,0) | (-1,0) |

$C_2^4 =$

| | | | |
|---|---|---|---|
| (-1,0) | (1,0) | (0,-1) | (0,-1) |
| (-1,0) | (1,0) | (0,-1) | (0,-1) |
| (0,-1) | (0,1) | (1,0) | (1,0) |
| (0,1) | (0,-1) | (-1,0) | (-1,0) |

### G3

$C_3^1 =$

| | | | |
|---|---|---|---|
| (-1,0) | (-1,0) | (0,1) | (0,-1) |
| (1,0) | (1,0) | (0,-1) | (0,1) |
| (0,1) | (0,1) | (1,0) | (-1,0) |
| (0,1) | (0,1) | (1,0) | (-1,0) |

$C_3^2 =$

| | | | |
|---|---|---|---|
| (1,0) | (1,0) | (0,1) | (0,-1) |
| (-1,0) | (-1,0) | (0,-1) | (0,1) |
| (0,-1) | (0,-1) | (1,0) | (-1,0) |
| (0,-1) | (0,-1) | (1,0) | (-1,0) |

$C_3^3 =$

| | | | |
|---|---|---|---|
| (1,0) | (1,0) | (0,-1) | (0,1) |
| (-1,0) | (-1,0) | (0,1) | (0,-1) |
| (0,1) | (0,1) | (1,0) | (-1,0) |
| (0,1) | (0,1) | (1,0) | (-1,0) |

$C_3^4 =$

| | | | |
|---|---|---|---|
| (-1,0) | (-1,0) | (0,-1) | (0,1) |
| (1,0) | (1,0) | (0,1) | (0,-1) |
| (0,-1) | (0,-1) | (1,0) | (-1,0) |
| (0,-1) | (0,-1) | (1,0) | (-1,0) |

### G4

$C_4^1 =$

| | | | |
|---|---|---|---|
| (1,0) | (-1,0) | (0,-1) | (0,-1) |
| (-1,0) | (1,0) | (0,1) | (0,1) |
| (0,-1) | (0,1) | (-1,0) | (-1,0) |
| (0,-1) | (0,1) | (-1,0) | (-1,0) |

$C_4^2 =$

| | | | |
|---|---|---|---|
| (-1,0) | (1,0) | (0,-1) | (0,-1) |
| (1,0) | (-1,0) | (0,1) | (0,1) |
| (0,1) | (0,-1) | (-1,0) | (-1,0) |
| (0,1) | (0,-1) | (-1,0) | (-1,0) |

$C_4^3 =$

| | | | |
|---|---|---|---|
| (-1,0) | (1,0) | (0,1) | (0,1) |
| (1,0) | (-1,0) | (0,-1) | (0,-1) |
| (0,-1) | (0,1) | (-1,0) | (-1,0) |
| (0,-1) | (0,1) | (-1,0) | (-1,0) |

$C_4^4 =$

| | | | |
|---|---|---|---|
| (1,0) | (-1,0) | (0,1) | (0,1) |
| (-1,0) | (1,0) | (0,-1) | (0,-1) |
| (0,1) | (0,-1) | (-1,0) | (-1,0) |
| (0,1) | (0,-1) | (-1,0) | (-1,0) |

FIG 15

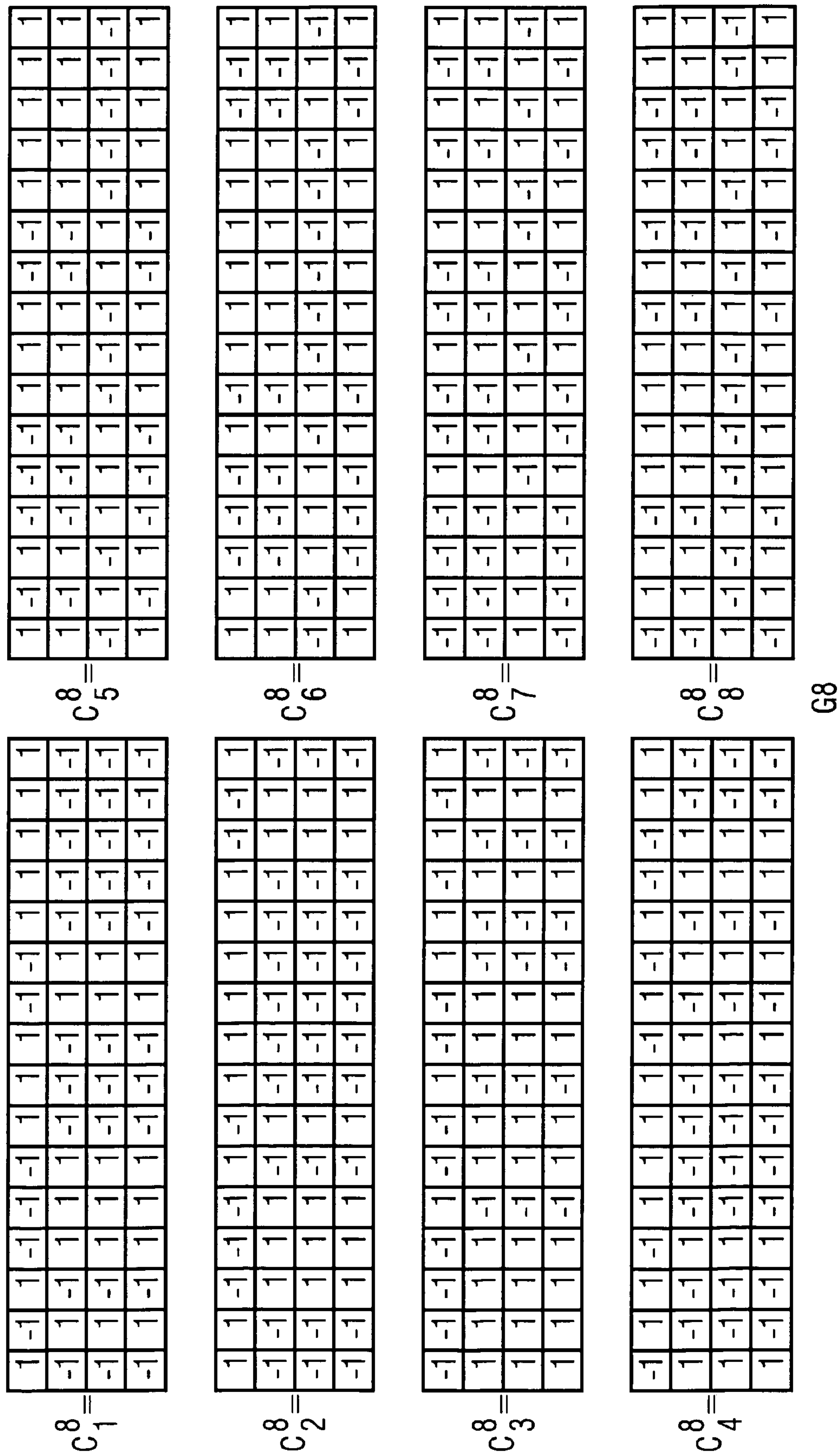

# FIG 16A

$C_1^1 =$

| | | | | | | | | | | | | | | | |
|---|---|---|---|---|---|---|---|---|---|---|---|---|---|---|---|
| (-1,0) | (1,0) | (-1,0) | (1,0) | (0,-1) | (-1,0) | (0,1) | (1,0) | (1,0) | (1,0) | (1,0) | (1,0) | (0,-1) | (1,0) | (0,1) | (-1,0) |
| (1,0) | (-1,0) | (1,0) | (-1,0) | (0,1) | (1,0) | (0,-1) | (-1,0) | (-1,0) | (-1,0) | (-1,0) | (-1,0) | (0,1) | (-1,0) | (0,-1) | (1,0) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |

$C_2^1 =$

| | | | | | | | | | | | | | | | |
|---|---|---|---|---|---|---|---|---|---|---|---|---|---|---|---|
| (1,0) | (0,1) | (-1,0) | (0,-1) | (0,1) | (0,-1) | (0,1) | (0,-1) | (-1,0) | (0,1) | (1,0) | (0,-1) | (0,1) | (0,1) | (0,1) | (0,1) |
| (-1,0) | (0,-1) | (1,0) | (0,1) | (0,-1) | (0,1) | (0,-1) | (0,1) | (1,0) | (0,-1) | (-1,0) | (0,1) | (0,1) | (0,-1) | (0,-1) | (0,-1) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |

G1

$C_3^1 =$

| | | | | | | | | | | | | | | | |
|---|---|---|---|---|---|---|---|---|---|---|---|---|---|---|---|
| (1,0) | (1,0) | (1,0) | (1,0) | (0,1) | (-1,0) | (0,-1) | (1,0) | (-1,0) | (1,0) | (-1,0) | (1,0) | (0,1) | (1,0) | (0,-1) | (-1,0) |
| (-1,0) | (-1,0) | (-1,0) | (-1,0) | (0,-1) | (1,0) | (0,1) | (-1,0) | (1,0) | (-1,0) | (1,0) | (-1,0) | (0,-1) | (-1,0) | (0,1) | (1,0) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |

$C_4^1 =$

| | | | | | | | | | | | | | | | |
|---|---|---|---|---|---|---|---|---|---|---|---|---|---|---|---|
| (1,0) | (0,-1) | (-1,0) | (0,1) | (0,1) | (0,1) | (0,1) | (0,1) | (-1,0) | (0,-1) | (1,0) | (0,1) | (0,1) | (0,-1) | (0,1) | (0,-1) |
| (-1,0) | (0,1) | (1,0) | (0,-1) | (0,-1) | (0,-1) | (0,-1) | (0,-1) | (1,0) | (0,1) | (-1,0) | (0,-1) | (0,-1) | (0,1) | (0,-1) | (0,1) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |

# FIG 16B

$C_5^1 =$

| | | | | | | | | | | | | | | | |
|---|---|---|---|---|---|---|---|---|---|---|---|---|---|---|---|
| (1,0) | (-1,0) | (1,0) | (-1,0) | (0,1) | (1,0) | (0,-1) | (-1,0) | (-1,0) | (-1,0) | (-1,0) | (-1,0) | (0,1) | (-1,0) | (0,-1) | (1,0) |
| (1,0) | (-1,0) | (1,0) | (-1,0) | (0,1) | (1,0) | (0,-1) | (-1,0) | (-1,0) | (-1,0) | (-1,0) | (-1,0) | (0,1) | (-1,0) | (0,-1) | (1,0) |
| (0,-1) | (0,1) | (0,-1) | (0,1) | (1,0) | (0,-1) | (-1,0) | (0,1) | (0,1) | (0,1) | (0,1) | (0,1) | (1,0) | (0,1) | (-1,0) | (0,-1) |
| (0,1) | (0,-1) | (0,1) | (0,-1) | (-1,0) | (0,1) | (1,0) | (0,-1) | (0,-1) | (0,-1) | (0,-1) | (0,-1) | (-1,0) | (0,-1) | (1,0) | (0,1) |

$C_6^1 =$

| | | | | | | | | | | | | | | | |
|---|---|---|---|---|---|---|---|---|---|---|---|---|---|---|---|
| (-1,0) | (0,-1) | (1,0) | (0,1) | (0,-1) | (0,1) | (0,-1) | (0,1) | (1,0) | (0,-1) | (-1,0) | (0,1) | (0,-1) | (0,-1) | (0,-1) | (0,-1) |
| (-1,0) | (0,-1) | (1,0) | (0,1) | (0,-1) | (0,1) | (0,-1) | (0,1) | (1,0) | (0,-1) | (-1,0) | (0,1) | (0,-1) | (0,-1) | (0,-1) | (0,-1) |
| (0,1) | (-1,0) | (0,-1) | (1,0) | (-1,0) | (1,0) | (-1,0) | (1,0) | (0,-1) | (-1,0) | (0,1) | (1,0) | (-1,0) | (-1,0) | (-1,0) | (-1,0) |
| (0,-1) | (1,0) | (0,1) | (-1,0) | (1,0) | (-1,0) | (1,0) | (-1,0) | (0,1) | (1,0) | (0,-1) | (-1,0) | (1,0) | (1,0) | (1,0) | (1,0) |

G1

$C_7^1 =$

| | | | | | | | | | | | | | | | |
|---|---|---|---|---|---|---|---|---|---|---|---|---|---|---|---|
| (-1,0) | (-1,0) | (-1,0) | (-1,0) | (0,-1) | (1,0) | (0,1) | (-1,0) | (1,0) | (-1,0) | (1,0) | (-1,0) | (0,-1) | (-1,0) | (0,1) | (1,0) |
| (-1,0) | (-1,0) | (-1,0) | (-1,0) | (0,-1) | (1,0) | (0,1) | (-1,0) | (1,0) | (-1,0) | (1,0) | (-1,0) | (0,-1) | (-1,0) | (0,1) | (1,0) |
| (0,1) | (0,1) | (0,1) | (0,1) | (-1,0) | (0,-1) | (1,0) | (0,1) | (0,-1) | (0,1) | (0,-1) | (0,1) | (-1,0) | (0,1) | (1,0) | (0,-1) |
| (0,-1) | (0,-1) | (0,-1) | (0,-1) | (1,0) | (0,1) | (-1,0) | (0,-1) | (0,1) | (0,-1) | (0,1) | (0,-1) | (1,0) | (0,-1) | (-1,0) | (0,1) |

$C_8^1 =$

| | | | | | | | | | | | | | | | |
|---|---|---|---|---|---|---|---|---|---|---|---|---|---|---|---|
| (-1,0) | (0,1) | (1,0) | (0,-1) | (0,-1) | (0,-1) | (0,-1) | (0,-1) | (1,0) | (0,1) | (-1,0) | (0,-1) | (0,-1) | (0,1) | (0,-1) | (0,1) |
| (-1,0) | (0,1) | (1,0) | (0,-1) | (0,-1) | (0,-1) | (0,-1) | (0,-1) | (1,0) | (0,1) | (-1,0) | (0,-1) | (0,-1) | (0,1) | (0,-1) | (0,1) |
| (0,1) | (1,0) | (0,-1) | (-1,0) | (-1,0) | (-1,0) | (-1,0) | (-1,0) | (0,-1) | (1,0) | (0,1) | (-1,0) | (-1,0) | (1,0) | (-1,0) | (1,0) |
| (0,-1) | (-1,0) | (0,1) | (1,0) | (1,0) | (1,0) | (1,0) | (1,0) | (0,1) | (-1,0) | (0,-1) | (1,0) | (1,0) | (-1,0) | (1,0) | (-1,0) |

FIG 17

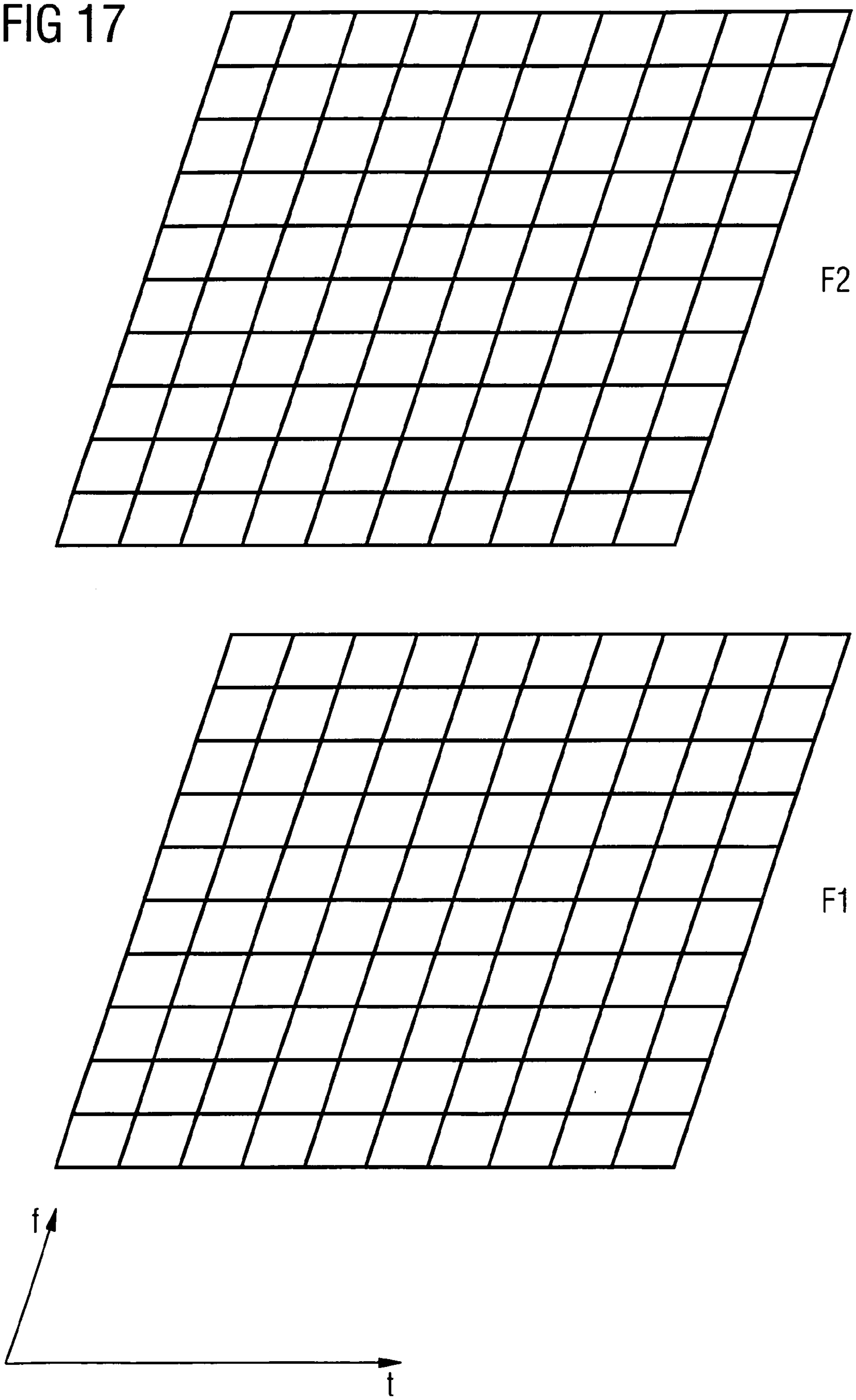

FIG 18

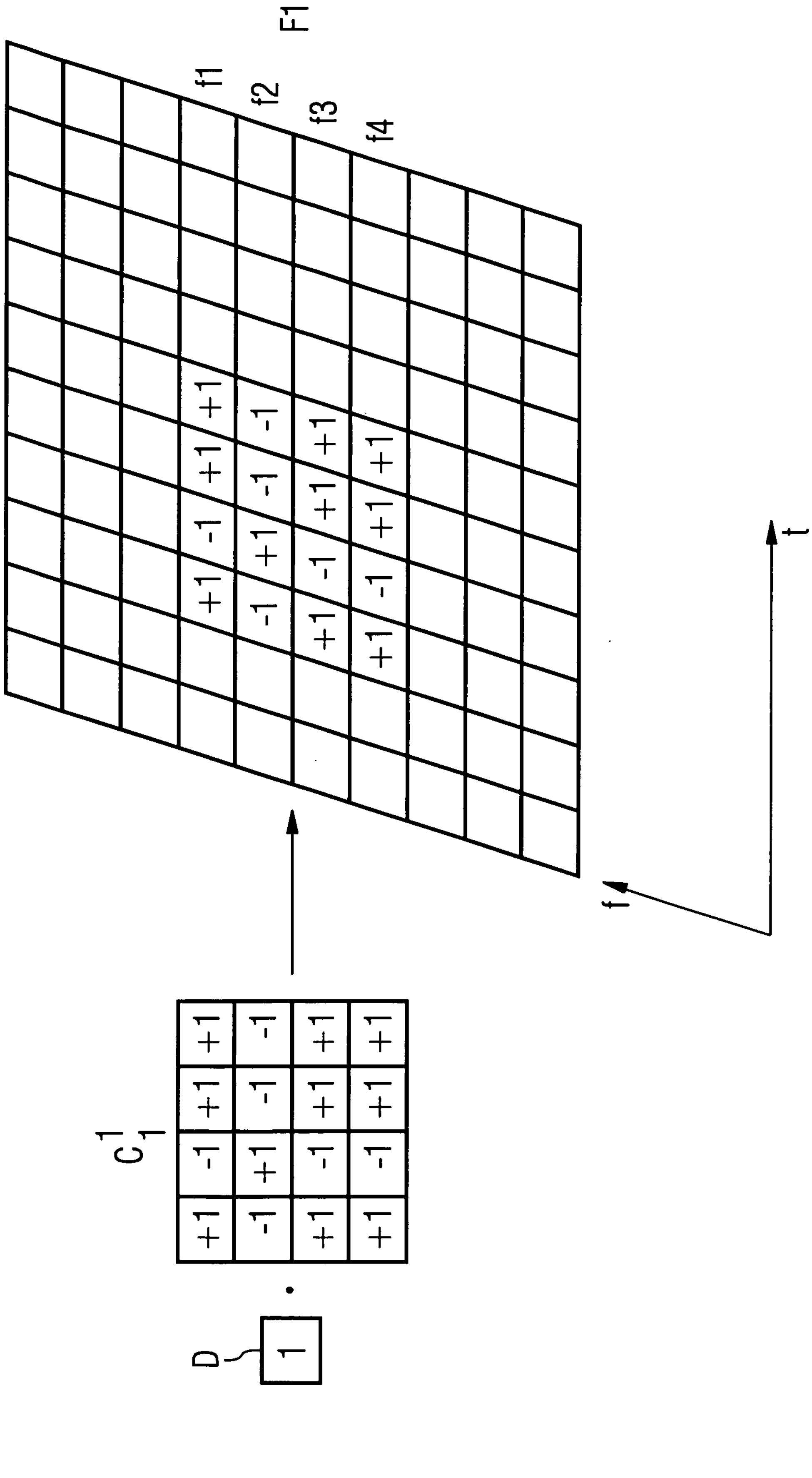

FIG 19

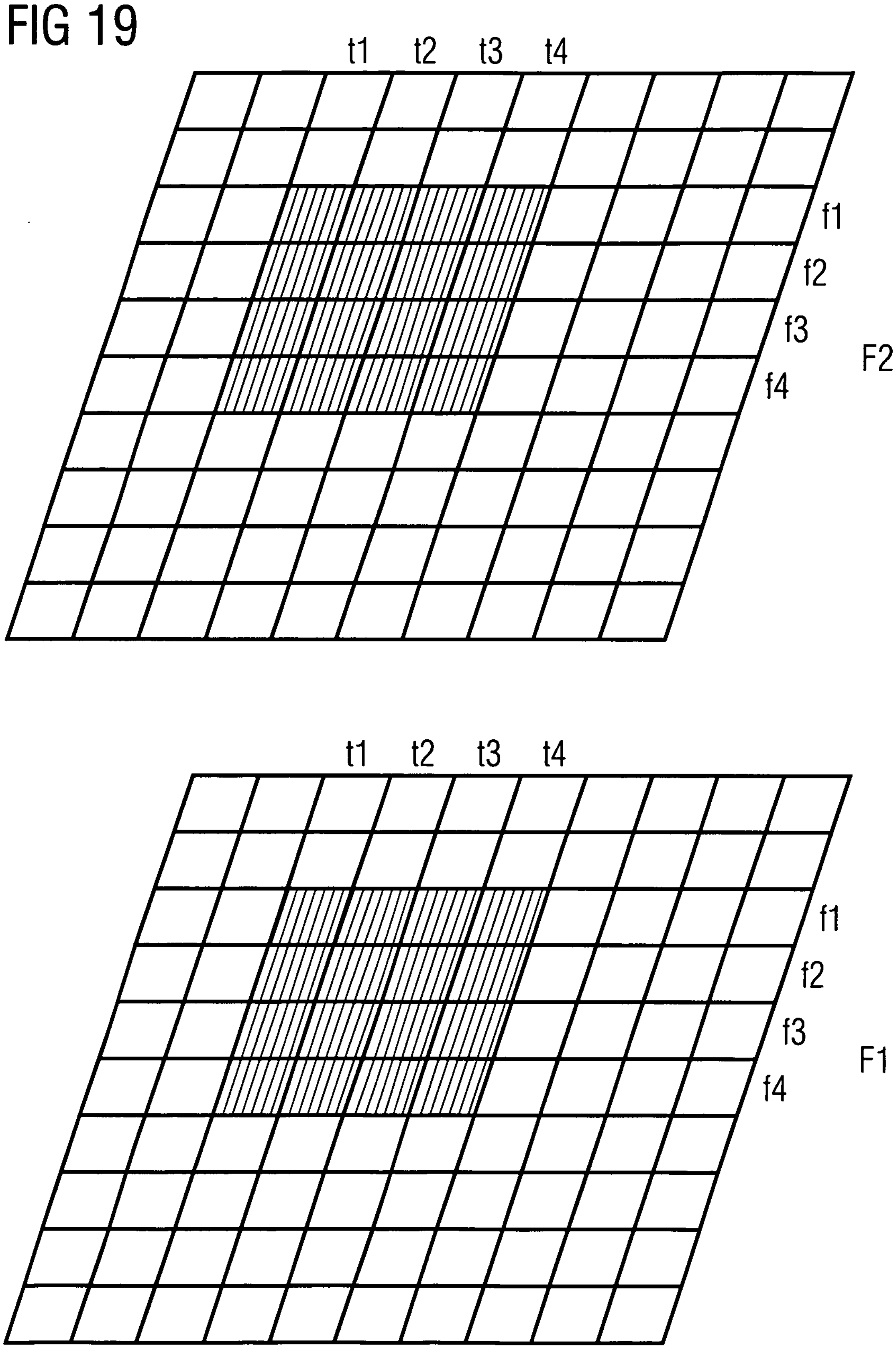

FIG 20

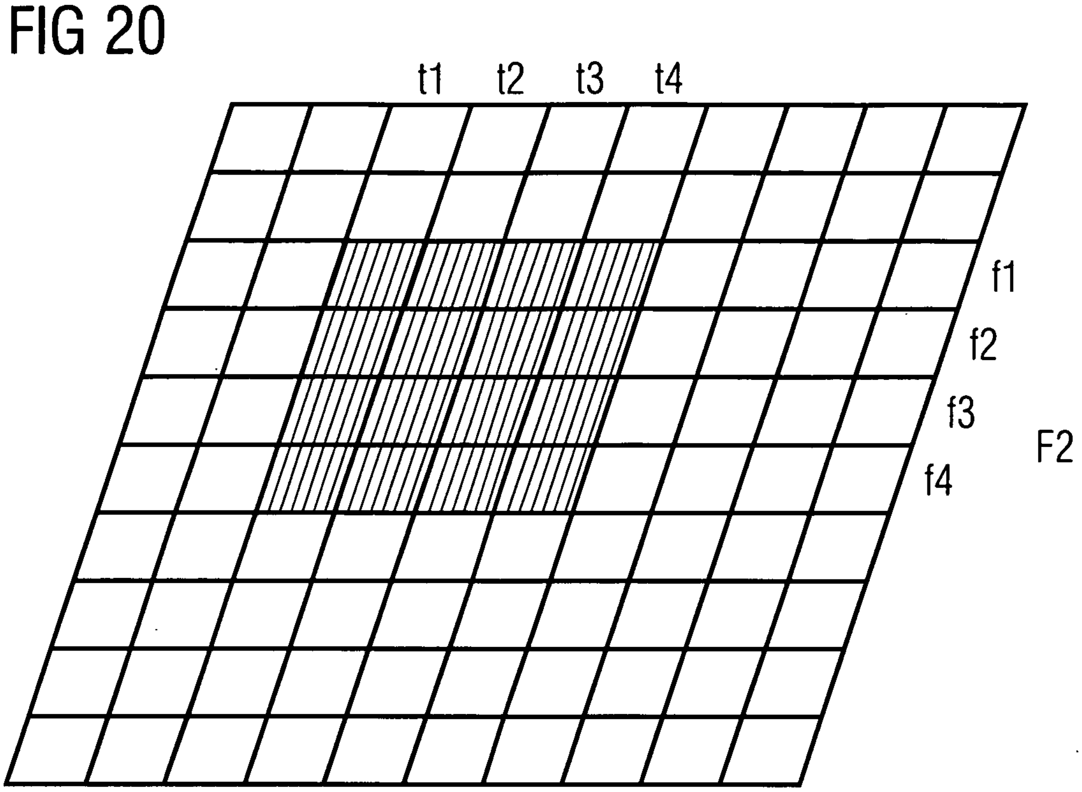


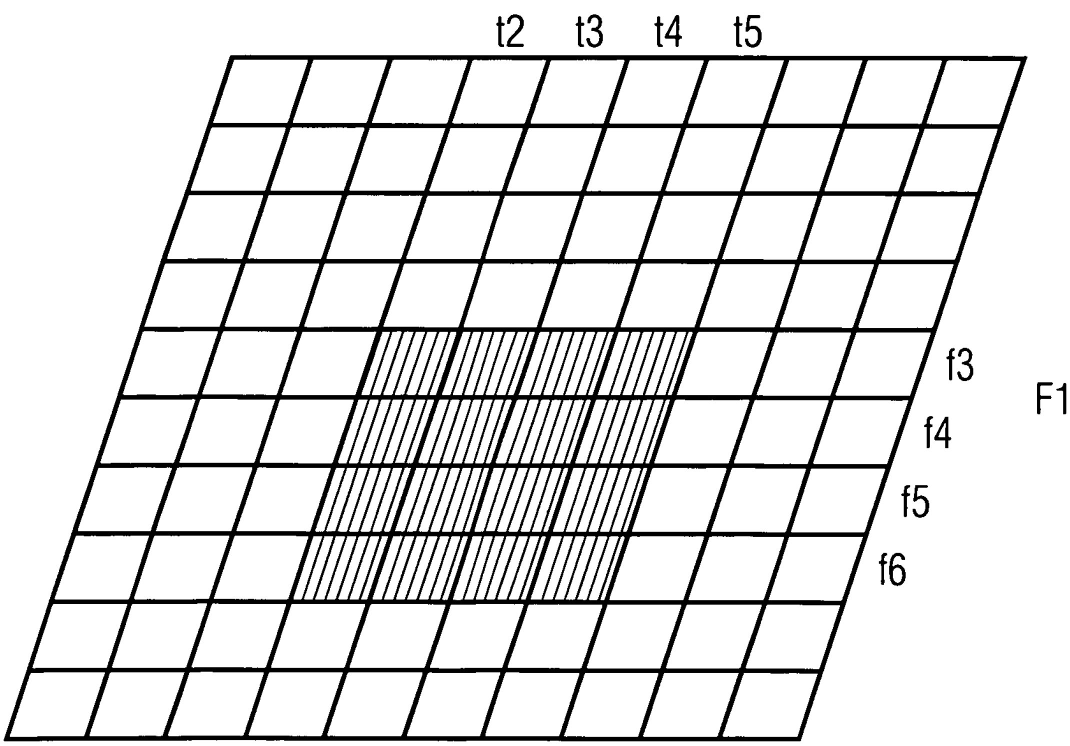

FIG 21

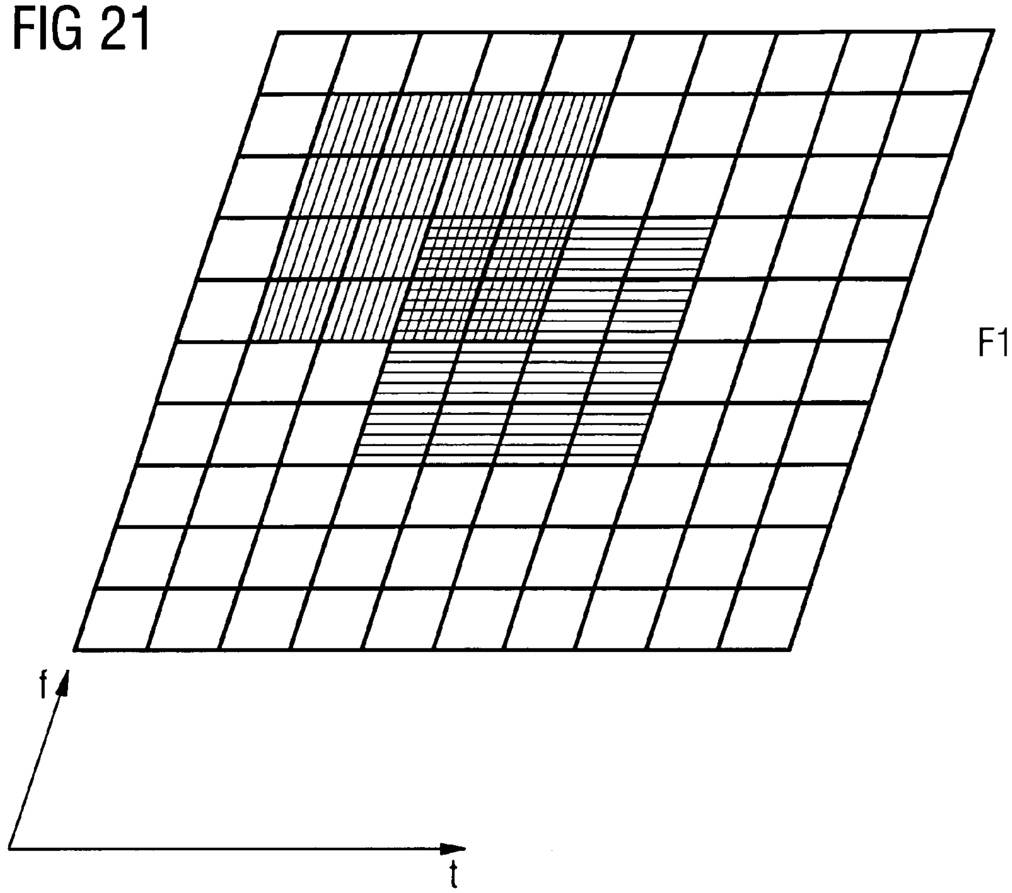


FIG 22

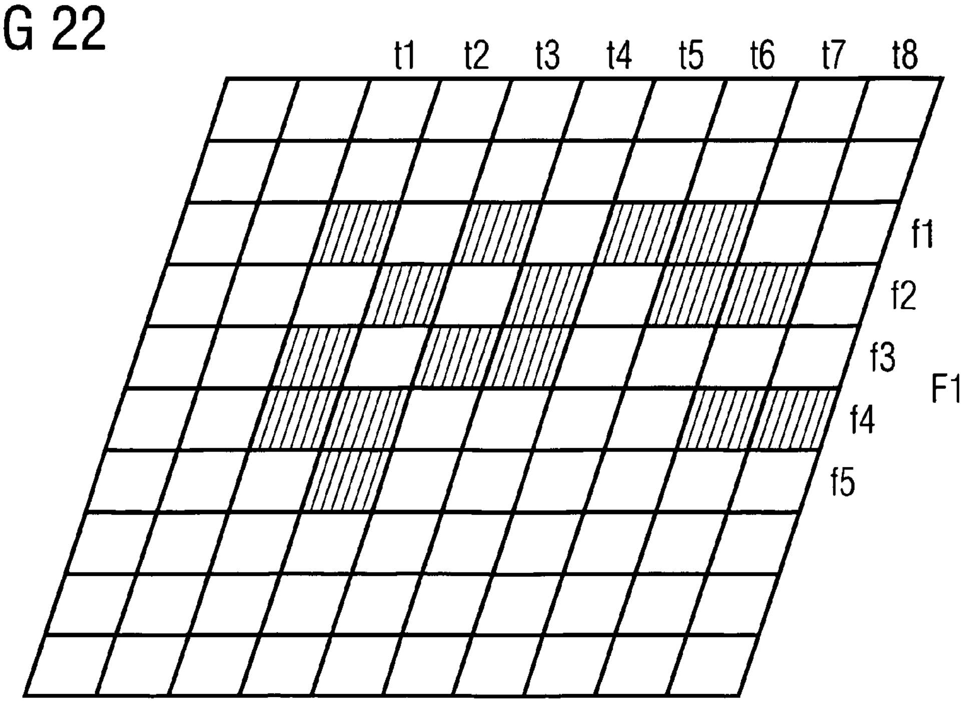

FIG 23A

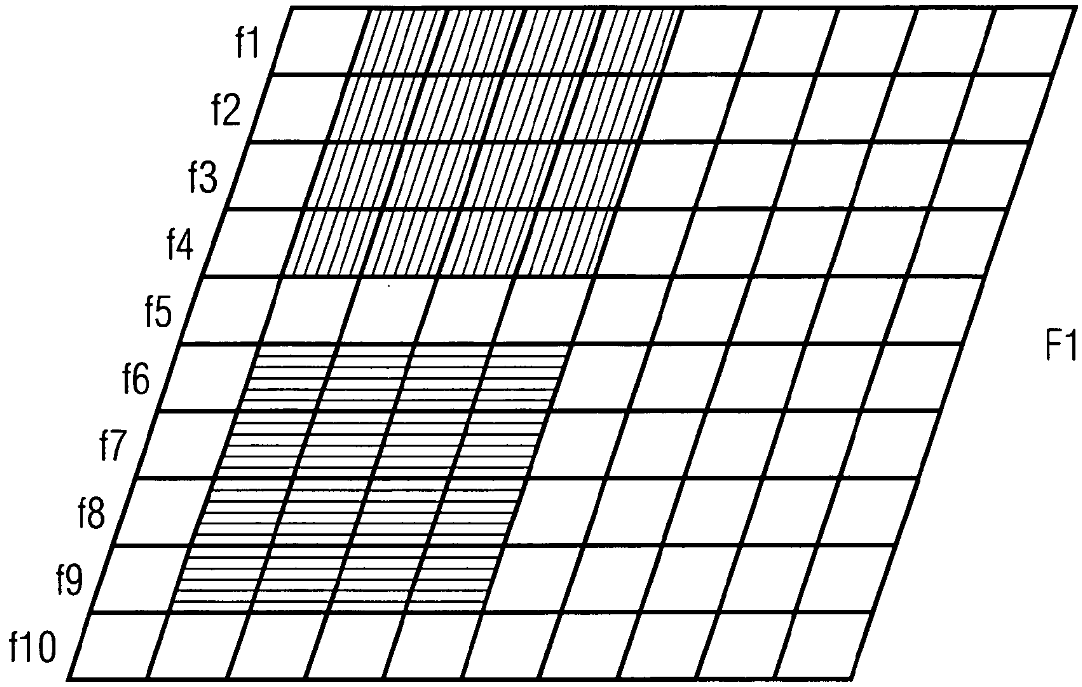


FIG 23B

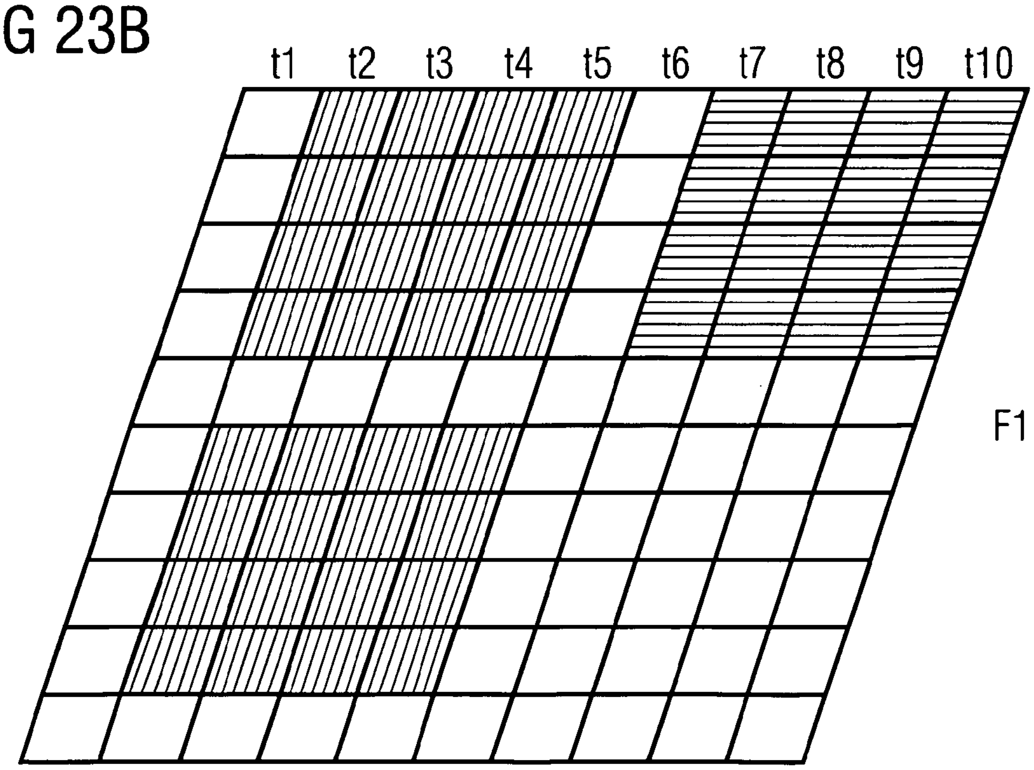

FIG 24

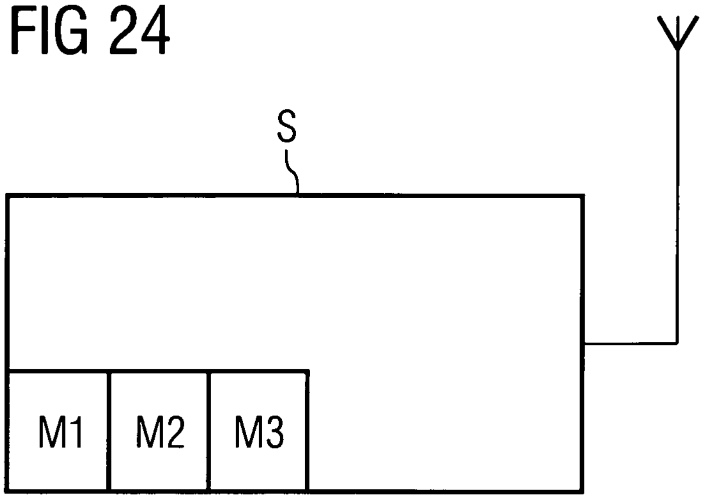


FIG 25

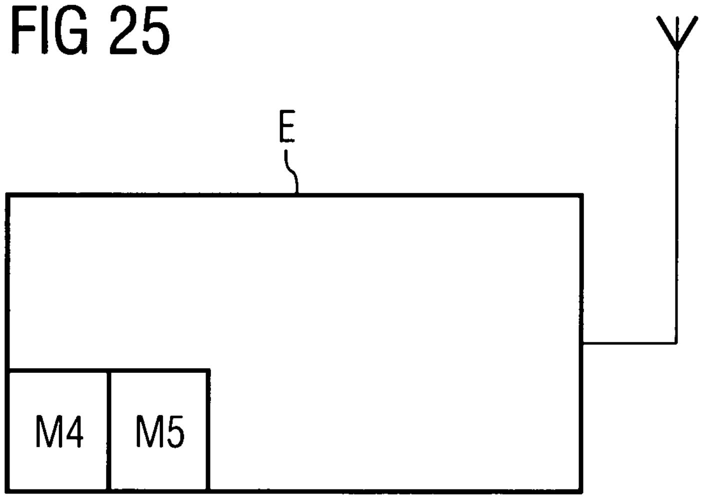

Europäisches Patentamt

# EUROPÄISCHER RECHERCHENBERICHT

Nummer der Anmeldung
EP 03 00 9464

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | CHEN, H.H.; YEH, J.F.; SUEHIRO, N.: "A multicarrier CDMA architecture based on orthogonal complete complementary codes for new generations of wideband wireless communications" IEEE COMMUNICATIONS MAGAZINE, Bd. 39, Oktober 2001 (2001-10), Seiten 126-135, XP002255313 * das gesamte Dokument * --- | 1-10 | H04J11/00<br>H04J13/04<br>H04L5/02 |
| A | WO 03 013038 A (INOGAI KAZUNORI ;SUMASU ATSUSHI (JP); UESUGI MITSURU (JP); MATSUSH) 13. Februar 2003 (2003-02-13) -& EP 1 317 086 A (INOGAI KAZUNORI;SUMASU ATSUSHI (JP); UESUGI MITSURU (JP); MATSUSH)) 4. Juni 2003 (2003-06-04) * Spalte 4, Absatz 14 - Absatz 15 * * Abbildungen 2,4,6,810,12 * ----- | 1-10 | |

RECHERCHIERTE SACHGEBIETE (Int.Cl.7)
H04J
H04L

Der vorliegende Recherchenbericht wurde für alle Patentansprüche erstellt

| Recherchenort | Abschlußdatum der Recherche | Prüfer |
|---|---|---|
| BERLIN | 23. September 2003 | Feng, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 03 00 9464

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2003

| Im Recherchenbericht angeführtes Patentdokument | Datum der Veröffentlichung | Mitglied(er) der Patentfamilie | Datum der Veröffentlichung |
|---|---|---|---|
| WO 03013038 A | 13-02-2003 | JP 2003046481 A | 14-02-2003 |
| | | EP 1317086 A1 | 04-06-2003 |
| | | WO 03013038 A1 | 13-02-2003 |

EPO FORM P0461

Für nähere Einzelheiten zu diesem Anhang : siehe Amtsblatt des Europäischen Patentamts, Nr.12/82